Europäisches Patentamt

European Patent Office

Office européen des brevets

(11) Publication number: **0 138 373**
**B1**

(12) **EUROPEAN PATENT SPECIFICATION**

(45) Date of publication of patent specification: 02.05.90

(51) Int. Cl.⁵: **G 06 K 9/44**

(21) Application number: 84306170.6

(22) Date of filing: 10.09.84

(54) Image thinning process.

(30) Priority: 15.09.83 US 532255

(43) Date of publication of application:
24.04.85 Bulletin 85/17

(45) Publication of the grant of the patent:
02.05.90 Bulletin 90/18

(84) Designated Contracting States:
DE FR GB IT SE

(56) References cited:
US-A-3 339 179
US-A-3 629 830
US-A-4 162 482

COMPUTER VISION, GRAPHICS AND IMAGE
PROCESSING, vol. 23, no. 1, July 1983, pages
99-112, Academic Press, Inc., New York, US; A.
FAVRE et al.: "Parallel syntactic thinning by
recoding of binary pictures"

(73) Proprietor: PITNEY BOWES, INC.
Walter H. Wheeler, Jr. Drive
Stamford Connecticut 06926 (US)

(72) Inventor: Pastor, Jose
191, Wilton Road
Westport, CT 06880 (US)

(74) Representative: Adams, William Gordon
RAWORTH, MOSS & COOK 36 Sydenham Road
Croydon Surrey CR0 2EF (GB)

# EP 0 138 373 B1

**Description**

The present invention relates to image pre-processing, and more specifically to an image thinning process.

Typically, after a character is scanned and the features to be analyzed are detected, the detected image (characters for an OCR machine) is compared with a mask stored in memory for recognition. If there is sufficient correspondence between the detected image and the mask, the character is recognized. However, it has long been recognized as desirable to find the skeleton of an image during image pre-processing to facilitate computer interpretation of images in optical character recognition and robotic systems. Present thinning techniques first require detection and isolation of the entire character prior to thinning. See, for example, United States Patent US—A—3,846,754, issued to Oka et al. on November 5, 1974; United States Patent US—A—3,940, 737, issued to Beun on February 24, 1976; United States Patent US—A—3,975,709, issued to Benn et al. on August 17, 1976; United States Patent US—A—4,034,344, issued to Savaga et al. July 5, 1977; United States Patent US—A—4,115,760, issued to Ito on September 19, 1978; and United States Patent US—A—4,162,482, issued to Su on July 24, 1979. Thereafter, complicated computations are performed on the detected image including finding edge gradients, chordal distances, etc. to find the skeleton of the image. With such techniques, one of the advantages of thinning, i.e., helping with line finding and the segmentation of lines into characters, is not used.

United States Patent US—A—3,339,179, issued to Shelton, Jr., et al. on August 29, 1967 disclosed an image thinning technique based on eliminating all the pixels not necessary for connectivity. Specifically, a pattern is obtained by interatively operating on the pattern to be identified with an incidence matrix. The result of operating on the input pattern by the incidence matrix is to generate an output pattern having a ridge of relatively high values along the center and lower values on either side of the ridge. Intersection points and end points are also determinable by the relative amplitudes of the values along the ridges. Such a thinning technique is not deterministic or universally applicable, but requires adjustments in the preservation values for different characters, e.g., by adjusting a potentiometer.

It is an object of the present invention to provide an improved image thinning process.

It is a further object of the present invention to provide an image thinning process which results in a thinned image which is more easily recognized.

It is a further object of the present invention to provide an image thinning process which facilitates line finding and segmentation of the images in optical character recognition machines.

It is a still further object of the present invention to provide an image thinning process which facilitates definition of the resulting thinned image in vector space.

It is still a further object of the present invention to provide an improved image thinning process which facilitates character recognition and therefore facsimile transmission.

It is a still further object of the present invention to provide an improved image thinning process which overcomes the disadvantages of prior image thinning processes.

In accordance with the present invention there is provided a process for thinning an image, comprising the steps of defining an image in terms of a plurality of discrete picture elements (pixels), convolving each horizontal string of pixels of the image with itself shifted a predetermined number of pixels, weighting each shifted position of each horizontal string, selecting certain of the pixels of the weighted horizontally convolved pixel strings which correspond to predetermined descriptors, indicative of central location, convolving each vertical string of pixels of the image with itself shifted a predetermined number of pixels, weighting each shifted position of each vertical string, selecting certain of the pixels of the weighted vertically convolved pixel strings which correspond to predetermined descriptors, ORing the selected pixels from the weighted vertical and horizontal convolutions and the pixels of the original image, retaining those pixels which are common to the original image and the selected pixels of both the horizontal and vertical weighted convolutions, discarding those pixels which are absent from the original image, filtering those pixels which are common to the original image and only one of the selected pixels of the horizontal and vertical weighted convolutions, further retaining certain of the filtered pixels and discarding others in accordance with a predetermined filter matrix which operates on each pixel in dependence upon its respective neighbourhood pixel array, and providing an output signal of the retained pixels which represents a thinned image.

The invention will now be described by way of example with reference to the accompanying drawings, in which:

Figure 1 is a schematic view of a generalized system for performing the image thinning process of the present invention;

Figure 2A is a schematic representation of the horizontal convolution of a pixel string of seven (7) pixels;

Figure 2B is a schematic representation of the horizontal convolution of a pixel string of five (5) pixels;

Figure 3 is a plan view of a typical image, shown as the alphanumeric character six (6);

Figure 4 is a plan view of a weighted horizontal convolution for the horizontal pixel strings of the image of Fig. 3 with the retained pixels shaded for clarity;

Figure 5 is a plan view of a weighted vertical convolution for the vertical pixel strings of the image of Fig. 3 with the retained pixels shaded for clarity;

2

Figure 6 is a composite image formed by summing pixel elements from the images of Figs. 3, 4 and 5;

Figure 7 illustrates a matrix neighborhood for forming a binary filter about each contingent pixel for determining whether the pixel is to be preserved or discarded;

Figure 8 illustrates the matrix neighborhood with reassigned binary values;

Figure 9 illustrates how the matrix filter is prepared from the matrix neighborhoods of Figs. 7 and 8;

Figure 10 illustrates a completed matrix filter with assigned values for the matrix neighborhoods;

Figure 11 shows an original image, illustrated as the alphanumeric characters zero (0), six (6) and eight (8);

Figure 12 shows the thinned image which results when the image of Fig. 11 is convolved and filtered with the matrix filter of Fig. 10;

Figure 13 shows a still thinner image which results when the thinned image of Fig. 12 is further filtered with an anorexic matrix filter;

Figure 14 is an anorexic matrix filter for eliminating overlapping pixels of portions of the thinned image shown in Fig. 12;

Figure 15 is a flowchart for implementing the process of the present invention on a digital computer with a matrix filter of the type illustrated in Fig. 10;

Figure 16 illustrates another filter matrix for application to pixels of value 1;

Figure 17 illustrates another filter matrix for application to pixels of value 2 if there are pixels of value 3 present in its 3 × 3 neighborhood;

Figure 18 illustrates another filter matrix for application to pixels of value 2 if there are no pixels of value 3 present in the neighborhood, but pixels of value 2 are present in the neighborhood;

Figure 19 illustrates another filter matrix for application to pixels of value 2 if there are no pixels of value 3 or 2 present in the neighborhood;

Figure 20 illustrates a combined filter matrix comprised of the filter matrices in Figs. 16 and 19;

Figure 21 is a flowchart for implementing the process of the present invention with different matrix filters, where pixels of value 1 and 2 are filtered in one sequence;

Figure 22 is a flowchart for implementing the process of the present invention with different filter matrices, where pixels of value 1 and 2 are filtered in one sequence, and the combined filter matrix of Fig. 20 is utilized.

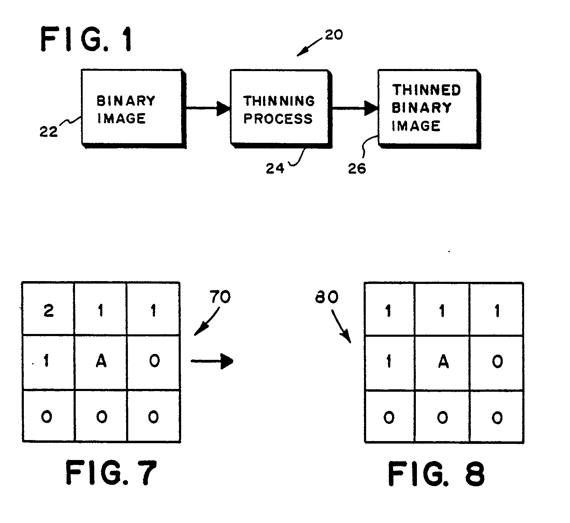

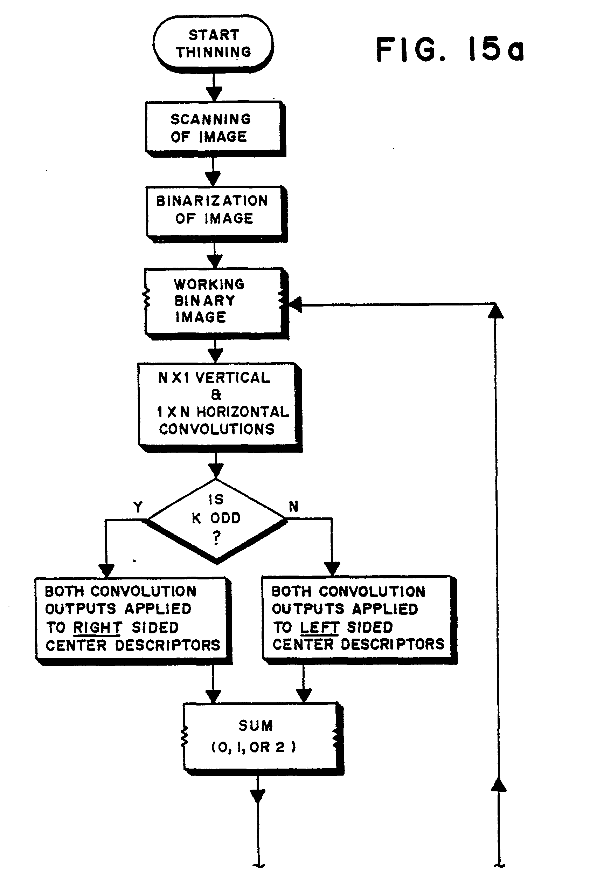

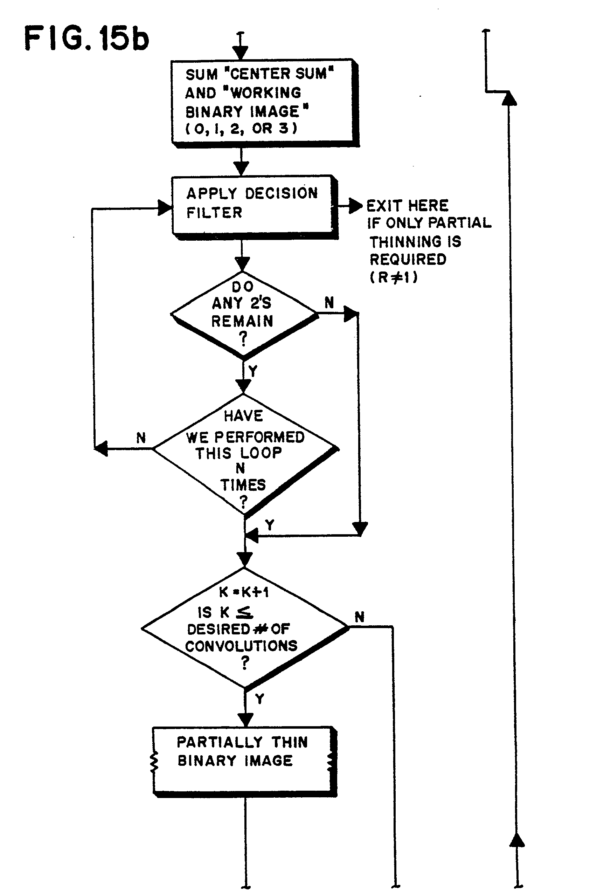

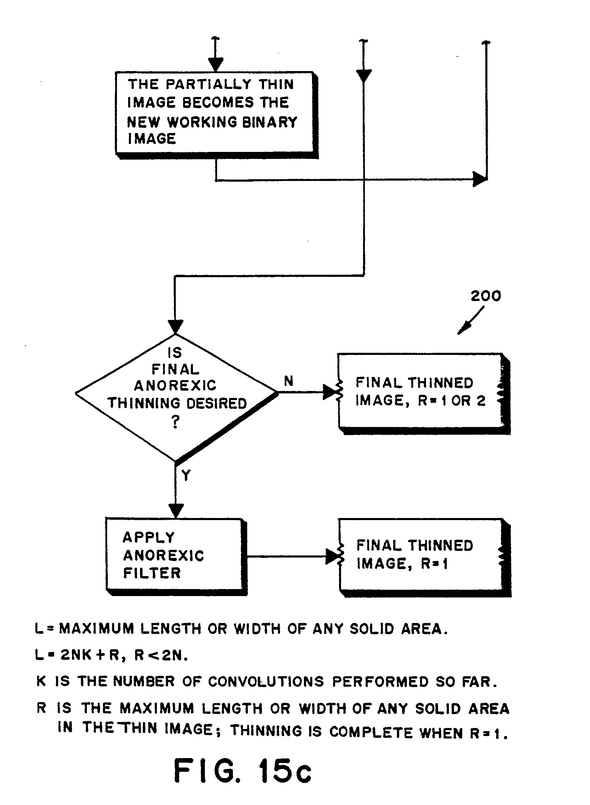

Referring to Fig. 1, a system for employing the process of the present invention, e.g., on a digital computer, is generally illustrated as 20. Binary image pulses 22 are supplied to a digital computer which is programmed to accomplish the thinning process 24, e.g., in accordance with the Program in the Appendix and flowcharts illustrated in Figs. 15, 21 or 22, as desired. The output in the form of the binary thinned image 26 may be displayed on a CRT display, as desired.

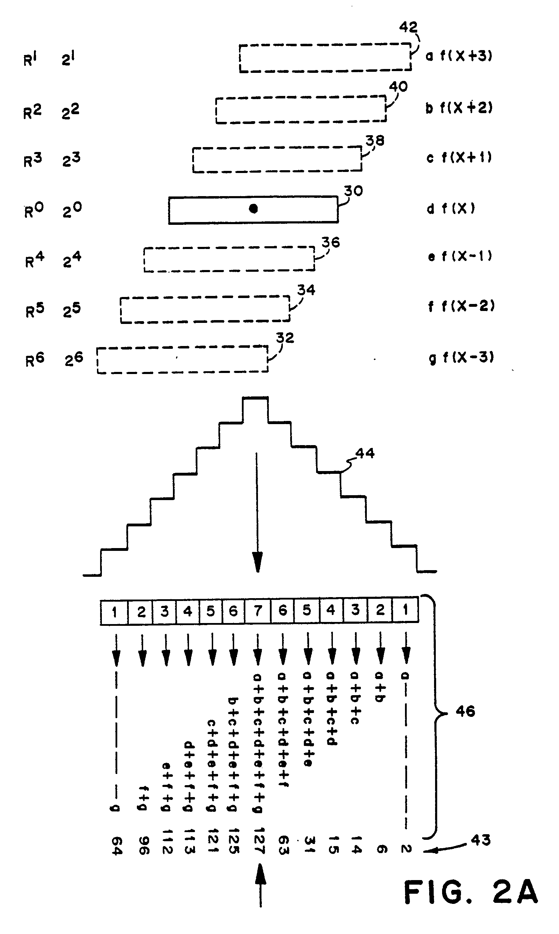

Referring to Fig. 2A, a seven (7) element horizontal pixel string of an image is illustrated at 30. The convolution

$$\sum_{i\,=\,-3}^{i\,=\,+3} f\,(x+i)$$

is performed to find the center of the pixel string 30 by shifting the axis of the horizontal pixel string 30 with itself by (3) pixels and adding the results. That is, the horizontal pixel string is convolved with a Dirac comb. The function f (x − 3) is designated 32, the functions f (x − 2) is designated 34, the function f (x − 1) is designated 36, the function f (x) is designated 30, the function f (x + 1) is designated 38, the function f (x + 2) is designated 40, and the function f (x + 3) is designated 42. Additionally, f (x + 3), f (x + 2), f (x + 1), f (x), f (x − 1), f (x − 2) and (x − 3) are multiplied by the weighting factors, a, b, c, d, e, f and g, respectively. The convolution which results from adding the functions of f (x ± i) is designated 44 in Fig. 2A.

Advantageously, each horizontal pixel position of the resulting convolution 44 has a value which results from adding the weights for each function. In this way a weighted horizontal map 46 is provided for each horizontal pixel position resulting from the horizontal convolution 44. Moreover, significantly, by utilizing the weighting factors the horizontal pixel position of the convolution 44 is readily weighted. For example, reading the horizontal map 46 from right to left in Fig. 2A, the first position is assigned the number 1 (representing 1 pixel) and the weighting factor a, the second position the number 2 (representing 2 pixels) and the weighting factor a + b, the third position the number 3 (representing 3 pixels) and the weighting factor a + b + c, the fourth position the number 4 (representing 4 pixels) and the weighting factor a + b + c + d, the fifth position the number 5 (representing 5 pixels) and the weighting factor a + b + c + d + e, the sixth position the number 6 (representing 6 pixels) and the weighting factor a + b + c + d + e + f, the seventh position the number 7 (representing 7 pixels) and the weighting factor a + b + c + d + e + f + g, the eighth position the number 6 (representing 6 pixels) and the weighting factor b + c + d + e + f + g, the ninth position the number 5 (representing 5 pixels) and the weighting factor c + d + e + f + g, the tenth position the number 4 (representing 4 pixels) and the weighting factor d + e + f + g, the eleventh position the number 3 (representing 3 pixels) and the weighting factor e + f + g, the twelfth position the number 2 (representing 2 pixels) and the weighting factor f + g, and thirteenth position the number 1 (representing 1 pixel) and the weighting factor g.

3

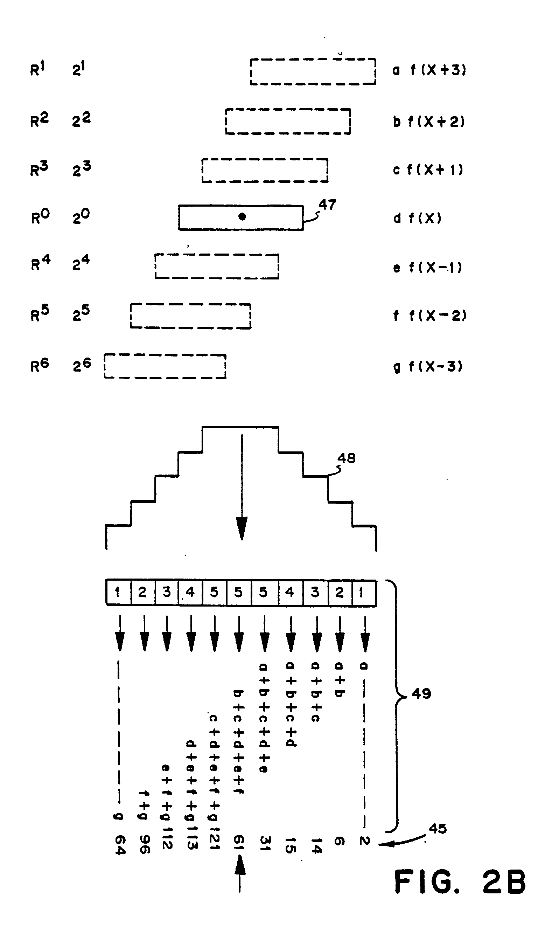

Referring to Fig. 2B, a five (5) element horizontal pixel string of an image is illustrated at 47. As with Fig. 2A the convolution

$$\sum_{i = -3}^{i = +3} f(x+i)$$

is performed to find the center of the pixel string 47 by shifting the axis of the horizontal pixel string 47 with itself by three (3) pixels and adding the results. The resulting convolution is designated 48 and its associated weighted horizontal map is designated 49. As with each horizontal pixel position in Fig. 2A, each horizontal pixel position of the convolution in Fig. 2B has a value which results from adding the weights for each function as seen at 49.

In assigning values to the pixels, the centres of the strings can be readily determined if the weighting factors are such that they produce for each weighted pixel a different value. Advantageously, this is achieved by defining the weights as powers of a number R, i.e., $R^1, R^2, R^3, R^0, R^4, R^5, R^6$, as shown in Figs. 2A and 2B for the example of a $\pm 3$ convolution. As a result, the values of the pixels are all different numbers in base R. Very advantageously, the base 2 may be used to facilitate implementation with digital electronics. Therefore, preferably R becomes 2 as illustrated in Figs. 2A and 2B and the resulting values of the horizontal pixel positions are designated as 43 and 45, respectively.

Thus, in the binary system moving from right to left the values for the pixels are indicated in Figs. 2A and 2B. The values that correspond to the centers are the descriptors indicated by the arrows whose formulation is discussed in detail below. The pixels having a value equal to those descriptors are preserved and all the other pixels eliminated. Thus, the centers of all the horizontal pixel strings, and similarly the centers of all the vertical pixel strings are determined. Thus, each center pixel of odd pixel strings and both center pixels of even pixel strings are uniquely described in binary digits. Moreover, it is apparent that each center pixel will always be described by an odd number or descriptor in decimal numbers.

It should be understood that although horizontal pixel strings of 7 and 5 pixels are illustrated in Figs. 2A and 2B, respectively, the horizontal and vertical pixel strings of an image can, and normally will, include varying numbers of pixels. Further, it should also be apparent from Figs. 2A and 2B that the maximum number of pixels eliminated from a pixel string undergoing a $3 \times 3$ convolution is equal to 5 pixels. Therefore, for long pixel strings additional convolutions may be applied to the resulting pixel strings, as desired.

In addition to preserving the descriptors for the center pixels of the pixel string, it is desired to preserve already short strings of pixels, e.g., those having only one or two pixels, to preserve voids in a pixel string, i.e., separations between characters, and prevent any artificial breaks in the resulting thinned image. To generalize from the illustration and description of Figs. 2A and 2B, this is accomplished by a Weighted Convolution defined as

$$WC = \sum_{i = -k}^{i = +k} a_i f(x+i)$$

where the selection of the $2k + 1$ coefficients $a_i$ finds the center for images up to $2k + 1$ pixels in length, the central plateau for strings longer than $2k + 1$ pixels, and preserves the already thin lines and the voids (character separations) in the strings of pixels.

Assume $k = 2$ and that there are six pixel strings having lengths of 1, 2, 3, 4, 5 and 6 pixels. If $a_{-2} = a$, $a_{-1} = b$, $a_0 = c$, $a_1 = d$ and $a_2 = e$, the coefficients are selected to satisfy the following conditions:

For the string of one pixel $c \neq$ other $c_5^1, c_5^2, c_5^3, c_5^4, c_5^5$

For the string of two pixels $a+b \neq c_5^1$, other $c_5^2, c_5^3, c_5^4, c_5^5$

For the string of three pixels $b+c+d \neq c_5^1, c_5^2$, other $c_5^3, c_5^4, c_5^5$

For the string of four pixels $a+b+c+d \neq c_5^1, c_5^2, c_5^3$, other $c_5^4, c_5^5$

For the string of five or more pixels $a+b+c+d+e \neq C_5^1$, $C_5^2$, $C_5^3$, $C_5^4$, other $C_5^5$

$c_5^i$ represents the addition of the numbers $a_i$ in the combinations of order i with 5 elements (a, b, c, d and e). The solution to this set of conditions locates the centers of pixel strings up to 2k + 1 pixels in length and the center plateau for pixel strings having a length greater than 2k + 1.

For any k, this approach can be generalized. As previously described with reference to Figs. 2A and 2B, the coefficients are $a_0 = 1$ and the other power of particular base in ascending order. Advantageously, when powers of 2 are utilized the coefficients are as follows:

For k=2:
$$a_{-2}=2^1$$
$$a_{-1}=2^2$$
$$a_0=1$$
$$a_1=2^3$$
$$a_2=2^4$$

For k=3:
$$a_{-3}=2^1$$
$$a_{-2}=2^2$$
$$a_{-1}=2^3$$
$$a_0=1$$
$$a_1=2^4$$
$$a_2=2^5$$
$$a_3=2^6$$

For k=4:
$$a_{-4}=2^1$$
$$a_{-3}=2^2$$
$$a_{-2}=2^3$$
$$a_{-1}=2^4$$
$$a_0=1$$
$$a_1=2^5$$
$$a_2=2^6$$
$$a_3=2^7$$
$$a_4=2^8$$

etc. for larger ks.

Further, by defining the coefficients in this manner, it is apparent that what results are 5 bit, 7 bit, 9 bit, etc. binary numbers.

The weighted convolution (WC) is then compared with a one-dimensional matrix of preservation values or descriptors $D_i$ as described above. Pixels of value $D_i$ are assigned the value 1 and all others the value 0.

For k = 3, the center descriptors to preserve for strings of 1, 2, 3, 4, 5, 6 and 7 pixels are 1, 3, 5, 7, 9, 11, 25, 27, 29, 33, 35, 37, 39, 41, 43, 59, 61, 63, 65, 67, 69, 71, 73, 89, 91, 93, 95, 97, 99, 101, 105, 107 and 127. The descriptors 1, 9, 25, 29, 61, 63 and 127 define the center pixel for the seven isolated strings of pixels. The other descriptors preserve the center pixels for the same strings when they are adjacent to other strings and separated by only one (1) or two (2) pixels. For an N × N convolution, adjacent strings separated by N or more pixels do not intrude to change the center descriptors.

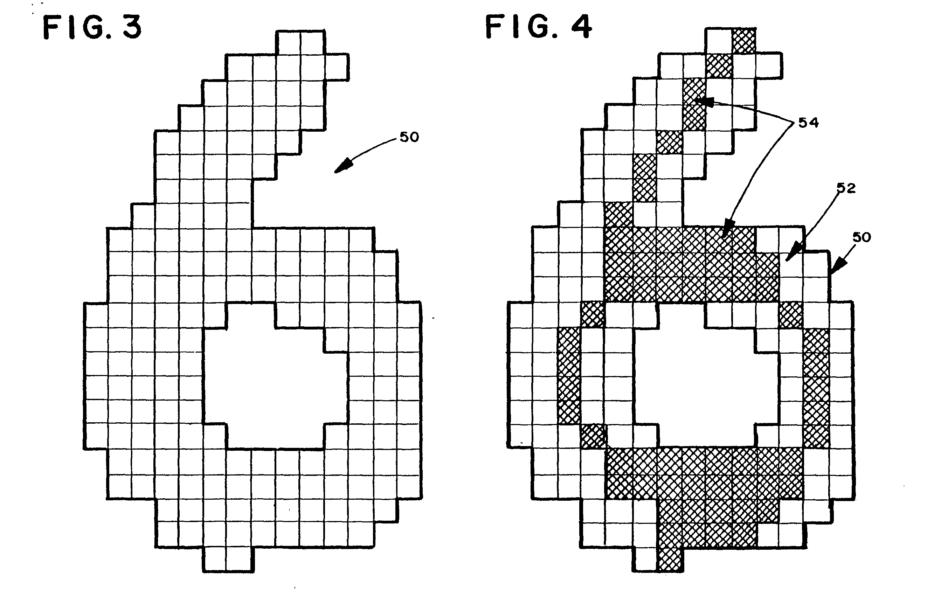

Referring to Fig. 3, a two dimensional image in the form of alphanumeric character six (6) is designated 50. Thinning of the image 50 in accordance with the present invention is accomplished by digitizing the same and performing a weighted horizontal convolution

$$WHC=\sum_{i=-k}^{i=+k} a_i f(x+i,y).$$

The resulting convolution is then compared with the matrix $D_i$ to determine the horizontal pixels to be preserved. The pixels to be preserved result in the shaded binary image 52 illustrated in dotted outline in Fig. 4. The specific horizontal pixels 54 to be preserved are shaded for clarity and superimposed over the original image 50. Next, the weighted vertical convolution

$$WVC = \sum_{i=-k}^{i=+k} a_i f(x, y+i)$$

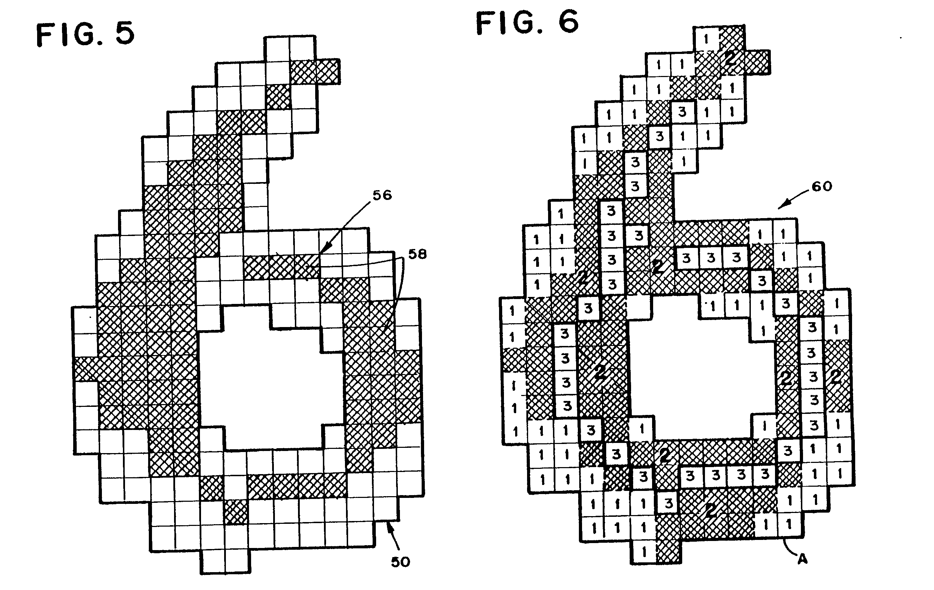

is performed and compared with the matrix $D_i$ to determine the vertical pixels to be preserved. The result is the shaded binary image 56 illustrated in dotted outline in Fig. 5. The specific vertical pixels 58 to be preserved are shaded for clarity and superimposed over the original image 50.

A composite image can now be formed, as illustrated in Fig. 6, by overlaying the original image 50 of Fig. 3 with the selected pixels from the weighted horizontal convolution 52 of Fig. 4 and the weighted vertical convolution 56 of Fig. 5. The resulting image 60 is composed of pixels which are assigned four distinct values or levels: 0, 1, 2 and 3. Pixels assigned a value of 0 are not part of the original image and remain 0. Pixels assigned a value of 3 are common to the original image of Fig. 3, and both the preserved pixels of the weighted horizontal convolution of Fig. 4 and the preserved pixels of the weighted vertical convolution of Fig. 5. Therefore, pixels of value 3 definitely belong to the thinned image or skeleton. Pixels of value 2 are common to the original image and only one of the selected pixels of the weighted horizontal or vertical convolutions, i.e., Figs. 4 or 5. Pixels of value 1 are in the original image only, see Fig. 3.

The composite image 60 is now filtered. The pixels of value 3 are preserved, the pixels of value 0 are discarded. The skeleton of the image 50 is then rebuilt with pixels of value 3 and predetermined pixels of value 1 and 2. That is, some of the pixels of value 1 and 2 are preserved, while others are eliminated. To accomplish this, a $3 \times 3$ neighborhood is applied to each pixel of value 1 or 2. In accordance with a selection rule, that pixel is discarded or made either a 3 (preserved) or a 2 (contingent). It is made a 3 if it is to be part of the skeleton and a 2 if the decision is conditional. Once the filter is applied, all the remaining pixels will have a value of 2 or 3. The filter is applied again to the pixels of value 2 and either all the pixels of value 2 are eliminated, converted to 3s, or a very few 2s remain. The filter is then applied to the pixels of value 2 again. For a $3 \times 3$ convolution, preferably the filter is applied 3 consecutive times.

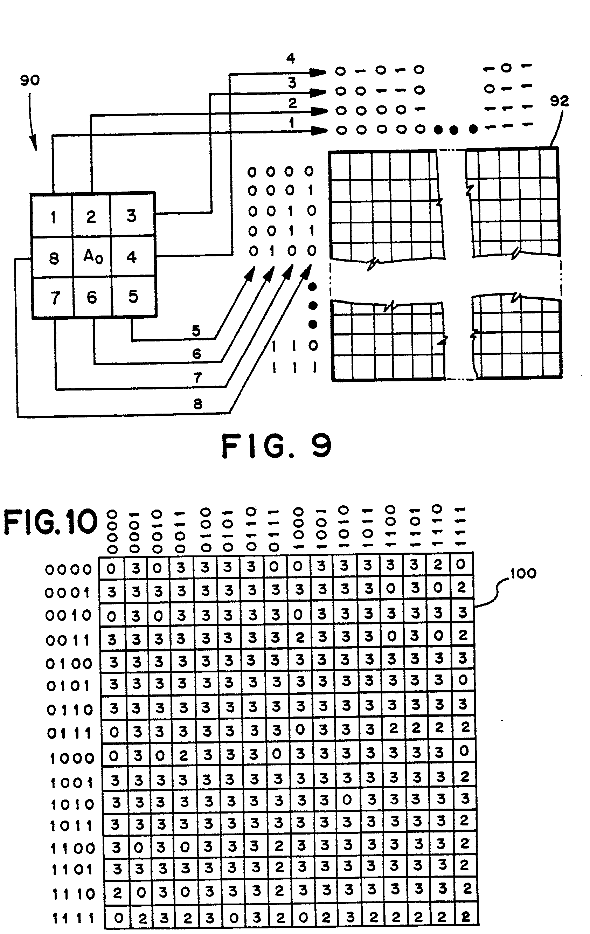

Referring to the pixel designated A in Fig. 6 a $3 \times 3$ neighborhood is applied thereto as shown in Fig. 7 as 70. The pixels of this neighborhood are binarized resulting in the neighborhood 80 illustrated in Fig. 8. That is, pixels of value 0 are assigned the value zero. Pixels of value 1, 2 or 3 are assigned the value 1.

Referring to Fig. 9, advantageously, the pixels of the neighborhood 90 are formed into all combinations of two (2) four bit numbers or nibbles as shown in the double entry table or filter matrix 92 of Fig. 9. Each neighborhood 90, as illustrated in Fig. 9, has pixels 1—4 assigned to a specific nibble along the horizontal axis of the double entry table 92 and pixels 5—8 assigned to a specific nibble along the vertical axis of the double entry table 92 to form a filter matrix for each pixel of the convolved composite image 60 of Fig. 6. The nibbles and specific values corresponding to the nibbles are set forth in the filter matrix illustrated as 100 in Fig. 10. For example, with regard to the pixel A in Fig. 6, the value assigned to this pixel in the filter matrix of Fig. 10, for the horizontal nibble 1110 and the vertical nibble of 0001, is 0. That is, pixel A is discarded.

In deriving the filter matrix 100 of Fig. 10, all pixels of value 1 are eliminated except: a. Those that will produce a break in the image; they are made 3 and b. Those pixels that are immersed in a full $3 \times 3$ neighborhood are made 2. From the pixels of value 2, those pixels are preserved which would produce a break if eliminated. Instead of defining a mathematical algorithm in terms of 4 and 8 connectivities, all 256 cases ($2^8$) have been analyzed one by one to define the filter matrix 100. However, as seen in the first program listing in the Program Appendix two different filter matrices have been utilized in the Image Thinning Process. The second filter matrix is actually the filter matrix 100. However, preferably, these two filter matrices are combined to form the single filter matrix 100.

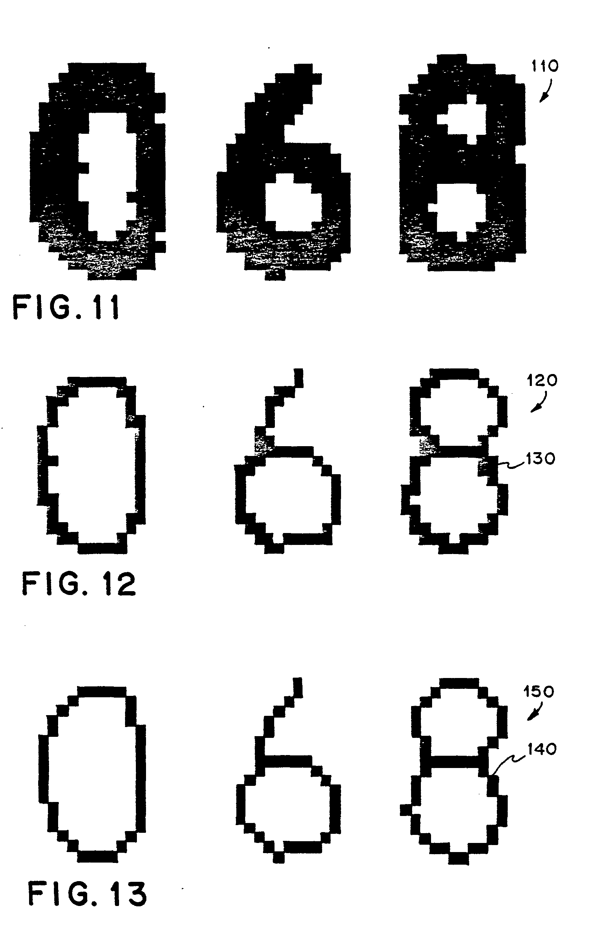

Fig. 11 illustrates an original image 110 in the form of alphanumeric characters 068. The result obtained by subjecting the image 110 of Fig. 11 to the thinning process in accordance with the present invention is the thinned alphanumeric characters 068, illustrated in Fig. 12 as 120.

The foregoing discussion has focused on $2 \times 2$ and $3 \times 3$ convolutions by way of example. However, it should be understood that the convolution $N \times N$ may be any integer. Instead of a horizontal convolution of 3 right and 3 left, and a vertical convolution of 3 up and 3 down for individual pixel strings, the convolution may be generalized to N right and N left, and N up and N down. The total numbers to preserve as descriptors of the centers of the pixel strings are as follows:

$$TD = 2^{2N-1} + 1.$$

| NxN convolution | Total Numbers $= 2^{2N+1}$ | Total Numbers to Preserve $= TD$ |
|---|---|---|
| 2x2 | 32 | 9 |
| 3x3 | 128 | 33 |
| 4x4 | 512 | 129 |
| 5x5 | 2048 | 513 |

Moreover, it is desirable to differentiate between right and left center pixels for strings of even numbers of pixels in which two center pixels are present. The descriptors to preserve are defined as follows:

For strings of odd numbers of pixels

$$L = 2j+1$$
$$j = 0 \ldots (n-1)$$
Preserve descriptors $D_1, \ldots D_{2j+1}$

$$D_1 (j=0) = 1 + 2p + 2^{N+j+2} q$$
$$p = 0,1,2 \ldots \left(2^{N-j'-1} - 1\right)$$
$$j' = j \text{ to } N-1$$
$$q = 0,1,2 \ldots \left(2^{N-j''-1} - 1\right)$$
$$j'' = j \text{ to } N-1$$

$$D_{2j+1} (j > 0) = 1 + \sum_{i=-(j-1)}^{i=j} 2^{N+i} + 2p + 2^{N+j+2} q$$
$$p = 0,1,2 \ldots \left(2^{N-j'-1} - 1\right)$$
$$j' = j \text{ to } (N-1)$$
$$q = 0,1,2 \ldots \left(2^{N-j''-1} - 1\right)$$
$$j'' = j \text{ to } (N-1)$$

For even strings $L = 2k \quad k = 1,2 \ldots N$

$$D_k \text{ Right} = 1 + \sum_{i=-(k-1)}^{i=k=1} 2^{N+i} + 2p + \left(2^{N+k+1} q\right)$$

7

$$p = 0, 1, 2 \ldots \left(2^{N-k'-1} - 1\right)$$

$$k' = k \text{ to } (N-1)$$

$$q = 0, 1, 2 \ldots \left(2^{N-k''} - 1\right)$$

$$k'' = k \text{ to } N$$

$$D_k \text{ Left} = 1 + \sum_{i = -(k-2)}^{i=k} 2^{N+i} + 2p + 2^{N+k+2} q$$

$$p = 0, 1, 2 \ldots 2^{N-k'} - 1$$

$$k' = k \text{ to } N$$

$$q = 0, 1, 2 \ldots \left(2^{N-k''-1} - 1\right)$$

$$k'' = k \text{ to } (N-1)$$

Thus, the total numbers to be preserved are:

$$T = (\text{all } \#j = 0) + \text{all } (\#j > 0) + \begin{array}{l} (\text{all } D_k \text{ Right}) \\ \text{or} \\ (\text{all } D_k \text{ Left}) \end{array}$$

If both $D_k$ Right and $D_k$ Left are preserved, the centers of even strings of pixels will be defined by two pixels. However, by preserving only $D_k$ Right and $D_k$ Left, advantageously the center of each even string of pixels is defined by only one pixel. Further, if only the right side pixels or the left side pixels are preserved, certain thinned images, specifically, those that are originally very thick and require the successive application of the convolution more than once may be biased to one side. Therefore, as desired, the weighted convolutions performed on an image may alternate between $D_k$ Right and $D_k$ Left. Moreover, to prevent holes or breaks in the thinned image, pixel strings having a length of two pixels are preserved without thinning. To accomplish this for a 3 × 3 convolution, the center descriptors for Left side thinning $D_k$ Left for two pixel strings are added to the center descriptors for the Right side thinning $D_k$ Right.

For a 3 × 3 weighted convolution, the descriptors to be preserved are:

1, 3, 5, 7, 9, 11, $\boxed{17, 19, 21, 23,}$ 25, 27, 29, 33, 35, 37, 39, 41, 43, $\boxed{57, 59,}$ 61, 63, 65, 67, 69, 71, 73, 75, 81, 83, 85, 87, 89, 91, 93, 97, 99, 101, 103, 105, 107, $\boxed{125,}$ 127.

The numbers inside the brackets represent the additional descriptors from Left side thinning $D_k$ Left.

Further, although the prior discussions have focused on N × N convolutions, i.e., a square for the convolution kernel, it may be advantageous to convolve with a rectangle M × N where M ≠ N. This may be advantageous for increasing speed or where an image is already thinner in one direction, e.g., the vertical direction. For M = 3 and N = 2, the horizontal center descriptors are as previously indicated and the vertical center descriptors are reduced to 1, 3, 5, 9, 11, 13, 15, 17, 19, 21, 29 and 31.

To provide further image thinning for maximum data compression and recognition algorithms, it is desirable to eliminate any line connections having more than one pixel, i.e., the overlapping of lines. This overlapping is due to the fact that strings of two pixels are retained as already thin because for such strings there is no center pixel. As seen in Fig. 12, a portion of the resulting thinned image may include overlapping connecting lines such as 130. It is advantageous for the reasons mentioned to eliminate such overlapping or double connecting lines 130 resulting in single connecting lines 140 as illustrated in the further thinned image 150 of Fig. 13.

To accomplish this further thinning, double connections of the resulting thinned image, such as seen in Fig. 12, are eliminated to produce the lines such as 140 illustrated in Fig. 13. Resulting lines at an angle of 45°, greater than 45°, or less than 45° are all thinned as seen in Fig. 13.

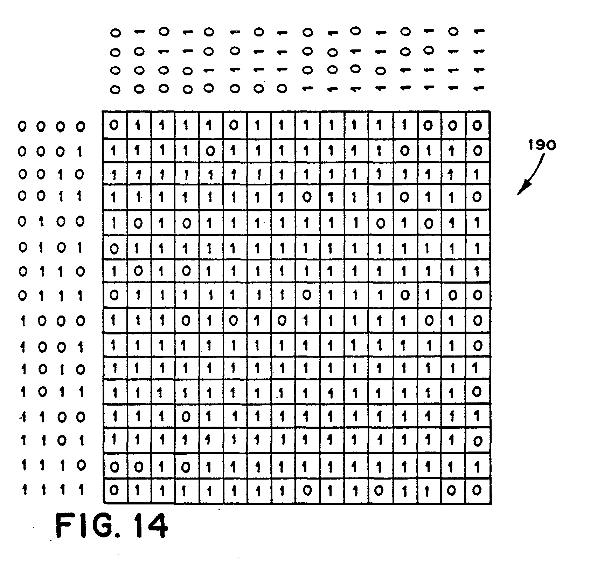

Referring to Fig. 14, this further thinning is accomplished with a non-symmetric anorexic matrix filter or double entry table 190 which may be advantageously applied to each pixel of the thinned image of Fig. 12. The anorexic matrix filter 190 is constructed from pixel neighborhoods in a manner similar to the construction of the matrix filter 100 of Fig. 10, with the precaution that breaks must be avoided. This means that either left and up pixels are eliminated and right and down pixels are preserved, or vice versa, but not both. Therefore, Fig. 14 is only illustrative of one possible anorexic filter.

Referring to Fig. 15, a flowchart designated 200 is illustrated for carrying out the process of the present invention with a digital computer. The image is digitized. Thereafter, the desired number of vertical and horizontal convolutions is determined. If the number of convolutions performed is odd, both vertical and horizontal convolutions are applied to the table of right sided center descriptors. If the number of convolutions performed is even, both vertical and horizontal convolutions are applied to the table of left sided center descriptors. That is, in accordance with whether the number of convolutions performed thus far is odd or even, the center descriptors to be applied alternate between left and right sided descriptors. The results of the convolutions are summed with the working binary image and the resulting pixels are assigned the values 0, 1, 2 or 3.

The filter matrix is then applied. If only partial thinning is required, the thinning is terminated after the filter matrix is applied once (EXIT). If the thinning is to proceed, the computer determines if any pixels of value 2 remain. If they do, the decision filter is applied N times. If no pixels of value 2 remain, it is determined whether the desired number of convolutions has been accomplished. When this occurs, it is determined whether anorexic thinning is desired. If not, thinning is complete. If anorexic thinning is desired, the anorexic filter is applied to the thinned image and thinning is complete. If the desired number of convolutions has not been accomplished, the partially thin image becomes the new working image and further convolutions and filtering is applied as desired.

The filter matrix 100 of Fig. 10 is applied sequentially until all or most of the pixels having a value 2 are eliminated. However, with the filter matrix 100 the information provided by the pixels having a value or weight of 3 is used only passively. Advantageously, the pixels having a value 3 may be used actively and a plurality of filter matrices constructed to immediately filter each pixel once in accordance with its value and the values of the pixels in its 3 × 3 neighborhood, thereby increasing the speed of the thinning process.

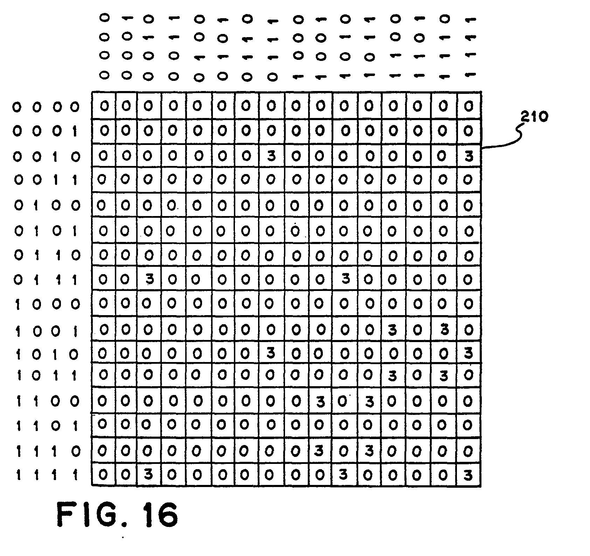

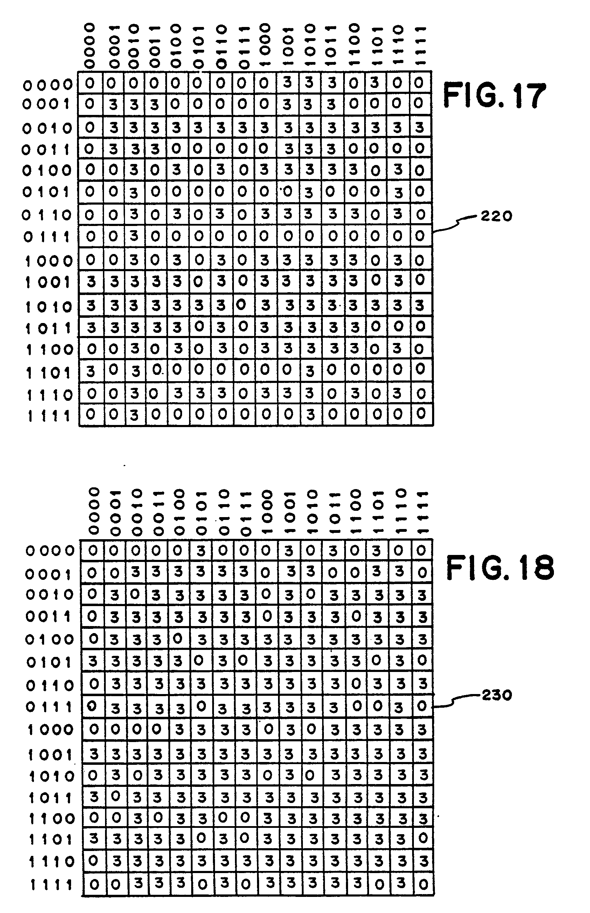

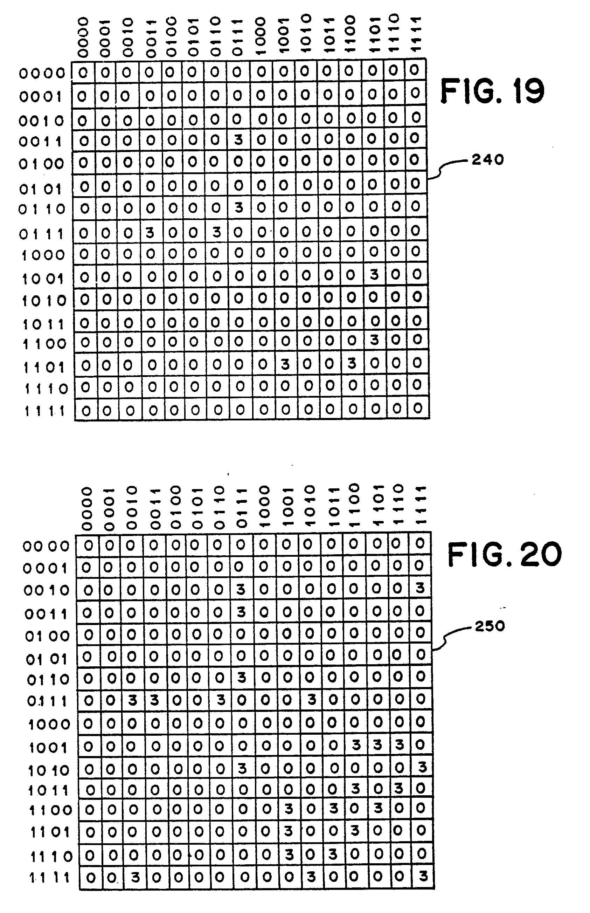

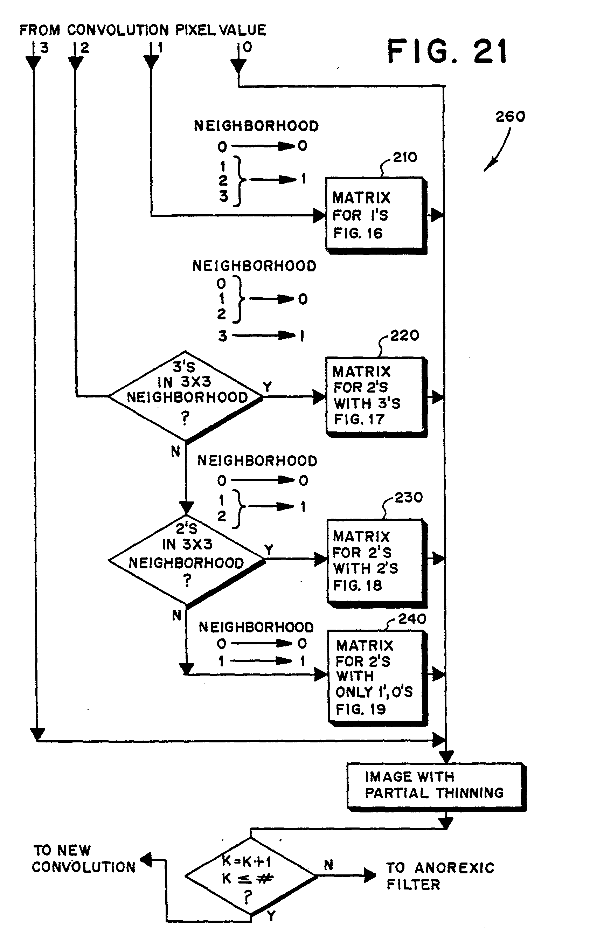

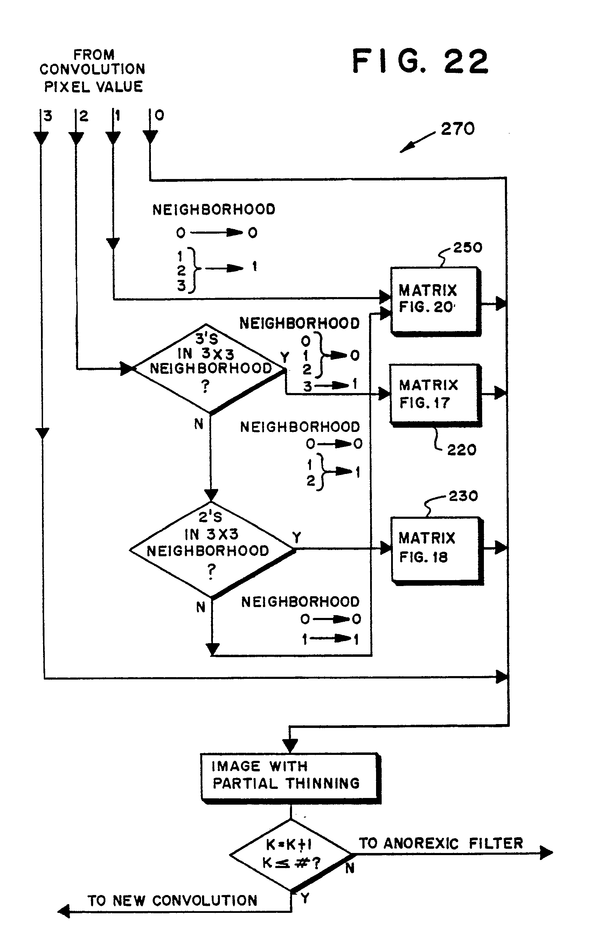

Specifically, if the pixel value is 1, the 1s, 2s and 3s present in the 3 × 3 neighborhood are made 1s and the 0s are made 0, and the filter matrix illustrated in Fig. 16 as 210 is applied in the same manner as the filter matrix 100 of Fig. 10. However, if the pixel value is 2, the values in its 3 × 3 neighborhood are analyzed and one of three (3) filter matrices is applied as follows: if there are pixels of value 3 present in the 3 × 3 neighborhood, the 3s are made 1s and the 2s, 1s and 0s are made 0s. The filter matrix illustrated in Fig. 17 as 220 is then applied. If there are no pixels of value 3 present in the 3 × 3 neighborhood, but pixels of value 2 are present, the 2s and 1s are made 1s and the 0s are made 0. The filter matrix illustrated in Fig. 18 as 230 is then applied. If there are no pixels of value 3 or 2 in the 3 × 3 neighborhood, but only 1s and 0s, the filter matrix illustrated in Fig. 19 as 240 is applied. As desired, the filter matrix 210 illustrated in Fig. 16 and the filter matrix 240 illustrated in Fig. 19 can be combined into one matrix as illustrated in Fig. 20 as 250.

Referring to Fig. 21, a flowchart designated 260 is illustrated for using the matrices 210, 220, 230 and 240 of Figs. 16, 17, 18 and 19 in the process of the present invention. Initially, this process utilizes the same sequence of operations as described with reference to the flowchart 200 of Fig. 15, with the exception of the decision filters to be applied and the two decision blocks thereafterr regarding remaining 2s and the number of filters to be applied (the loop). Thereafter, the flowchart illustrated in Fig. 21 as 260 is utilized. If the pixel value is 1 the filter matrix 210 of Fig. 16 is applied. If the pixel value is 2, the 3 × 3 neighborhood is checked to determine the absence or presence of 3s or 2s therein. If 3s are present, the filter matrix 220 of Fig. 17 is applied. If 2s are present but no 3s, the filter matrix 230 of Fig. 18 is applied. If no 3s or 2s are present in the neighborhood, the filter matrix 240 of Fig. 19 is applied.

However, if it is desired to utilize the filter matrix 250 of Fig. 20, the flowchart illustrated in Fig. 22 as 270 is utilized in place of the sequence of operations specified in flowchart 260 of Fig. 21.

Specifically, if the pixel has a value of 1 or a value of 2 and no 2s or 3s are present in its 3 × 3 neighborhood the filter matrix 250 of Fig. 20 is applied. With regard to other pixels of value 2 the filter matrix 220 of Fig. 17 is applied if 3s are present in the 3 × 3 neighborhood and the filter matrix 230 of Fig. 18 is applied if there are no 3s in the 3 × 3 neighborhood, but 2s are present in the neighborhood.

Thus, as apparent from the foregoing description, the thinning process of the present invention can employ a weighted convolution, followed by one or more filter matrices, as well as the anorexic filter matrix, as desired. Further, additional weighted convolutions and filtering may be utilized in various combinations as desired. However, if a new convolution is to be applied after filtering, all the non-zero pixels are first made 1 to effectively represent the new working image.

## Claims

1. A process for thinning an image, comprising the steps of:
   defining an image in terms of a plurality of discrete picture elements i.e. pixels;

convolving each horizontal string of pixels of the image with itself shifted a predetermined number of pixels;

weighting each shifted position of each horizontal string;

selecting certain of the pixels of the weighted horizontal convolved pixel strings which correspond to predetermined descriptors indicative of central location;

convolving each vertical string of pixels of the image with itself shifted a predetermined number of pixels;

weighting each shifted position of each vertical string;

selecting certain of the pixels of the weighted vertically convolved pixel strings which correspond to predetermined descriptors;

ORing the selected pixels from the horizontal and vertical weighted convolutions and the pixels of the original image;

retaining those pixels which are common to the original image and the selected pixels of both the horizontal and vertical weighted convolutions;

discarding those pixels which are absent from the original image;

filtering those pixels which are common to the original image and only one of the selected pixels of the horizontal and vertical weighted convolutions;

further retaining certain of the filtered pixels and discarding others in accordance with a predetermined filter matrix which operates on each pixel in dependence upon its respective neighborhood pixel array; and

providing an output signal of the retained pixels which represents a thinned image.

2. A process according to Claim 1, including the steps of:

selecting the central pixel of each pixel string having an odd number of pixels;

selecting at least one of the pixels to the left or right of center of each pixel string having an even number of pixels.

3. A process according to Claim 1 or 2, including the steps of:

assigning values to the ORed pixels in accordance with the extent of their commonality with the original image and the selected pixels of the horizontal and vertical weighted convolutions;

forming a neighborhood for each pixel which is in the original image only or is common to the original image and only one of the selected pixels of the horizontal and vertical weighted convolutions;

digitizing the pixels in the neighborhood by assigning a zero value to those pixels in the neighborhood having a certain value and a one to other pixels in the neighborhood having a different value;

forming two binary numbers from the digitized neighborhood;

providing a filter matrix with the binary numbers for determining whether a particular pixel is to be preserved as part of the thinned image.

4. A process according to Claim 3, including the step of:

applying the same filter matrix to certain of the preserved pixels a plurality of times to provide further thinning.

5. A process according to Claim 4, wherein:

the same filter matrix is applied three times.

6. A process according to Claim 3, wherein:

each pixel neighborhood includes 3 × 3 pixel matrix with the pixel being examined arranged at the center thereof.

7. A process according to Claim 1, including the steps of:

applying different filter matrices to pixels which are in to the original image only and certain pixels which are common to the original image and only one of the selected pixels from the horizontal and vertical weighted convolution.

8. A process according to Claim 7, including the steps of:

applying a neighborhood to each pixel which is the original image only and the selected pixels which are common to the original image and only one of the selected pixels from the horizontal and vertical weighted convolutions;

applying a first filter matrix to those pixels which are in the original image only;

applying a second filter matrix to those pixels common to the original image and only one of the selected pixels from the horizontal and vertical weighted convolutions which have a pixel present in its neighborhood which is common to the original image and the selected pixels from both of the horizontal and vertical weighted convolutions;

applying a third filter matrix to those pixels common to the original image and only one of the selected pixels from the horizontal and vertical weighted convolutions which have a pixel present in its neighborhood which is common to the original image and only one of the selected pixels of the horizontal and vertical weighted convolutions and the absence of any pixels present in the neighborhood which are common to the original image and the selected pixels from both of the horizontal and vertical weighted convolutions;

applying a fourth filter matrix to those pixels common to the original image and only one of the selected pixels from the horizontal and vertical weighted convolutions which have only pixels present in its neighborhood which are absent from one or both of the selected pixels of the horizontal and vertical

EP 0 138 373 B1

weighted convolutions.

9. A process according to Claim 8, wherein:
the first filter matrix and fourth filter matrix are the same.

10. A process according to Claim 1, including a step of:
applying the horizontal and vertical convolutions a plurality of times.

11. A process according to Claim 1, wherein;
the predetermined number of pixels which the horizontal strings of pixels are shifted for the horizontal convolution differs from the predetermined number of pixels which the vertical strings of pixels are shifted from the vertical convolution.

12. A process according to Claim 1, including the steps of:
applying an anorexic filter matrix to the thinned image to eliminate double line connections.

13. A process according to Claim 1, wherein:
the pixels are filtered a plurality of times.

14. A process for thinning an image, comprising the steps of:
defining an image in terms of a plurality of discrete picture elements i.e. pixels;
performing a horizontal convolution with each horizontal pixel string by shifting it horizontally a predetermined number of pixels;
weighting each shifted horizontal pixel position of the horizontal strings by assigning a predetermined number thereto;
providing a horizontal descriptor matrix corresponding to certain of the shifted horizontal pixel positions of the horizontal strings indicative of central location;
selecting certain of the pixels of the weighted horizontally convolved pixel strings which correspond to the descriptors of the horizontal descriptor matrix;
performing a vertical convolution with each pixel strings by shifting it vertically a predetermined number of times;
weighting each shifted vertical pixel position of the vertical strings by assigning a predetermined number thereto;
providing a vertical descriptor matrix corresponding to certain of the shifted vertical pixel positions of the vertical strings indicative of central location;
selecting certain of the pixels of the weighted vertically convolved pixel strings which correspond to the descriptors of the vertical descriptor matrix;
forming in effect a composite image with the pixels of the original image, the selected pixels from the weighted horizontal convolution, and the selected pixels from the weighted vertical convolution;
preserving those pixels which are common to the original image and the pixels selected from both the weighted horizontal and weighted vertical convolutions;
discarding those pixels which are absent from the original image;
filtering those pixels of the composite image which are common to the original image and only one of the selected pixels from the horizontal and vertical weighted convolutions to preserve certain of the filtered pixels and discard others in accordance with a predetermined filter matrix which operates on each pixel in dependence upon its respective neighborhood pixel array; and
providing an output signal of the preserved pixels which represents a thinned image.

15. A process according to Claim 14, including the steps of:
assigning values to the pixels of the composite image in accordance with the extent of their commonality with the original image and the selected pixels of the horizontal and vertical weighted convolutions;
forming a neighborhood for each pixel of the composite image which is common to the original image or the original image and only one of the selected pixels of the horizontal and vertical weighted convolutions;
digitizing the pixels of the neighborhood by assigning a zero value to those pixels in the neighborhood having a certain value and a one to other pixels in the neighborhood having a different value;
providing a filter matrix from the neighborhoods for determining whether a particular pixel is to be preserved as part of the thinned image.

16. A process according to Claim 14, including the steps of:
selecting the central pixel of each pixel string having an odd number of pixels;
selecting at least one of the pixels to the left or right of center of each pixel string having an even number of pixels.

17. A process according to Claim 15, wherein:
each pixel neighborhood includes a 3 × 3 pixel matrix with the pixel being examined arranged at the center thereof.

18. A process according to Claim 14, including the step of:
applying an anorexic matrix filter to the resulting thinned image to eliminate double line connections.

19. A process according to Claim 14, including the step of:
repeating the filtering step a plurality of times after the horizontal and vertical convolutions to determine which pixels are to be preserved as part of the thinned image and which pixels are to be eliminated.

11

20. A process according to Claim 14, including the step of:
performing additional horizontal and vertical convolutions on the thinned image after filtering.

21. A process according to Claim 14, including the steps of:
applying different filter matrices to pixels which are common to the original image and certain pixels which are common to the original image and only one of the selected pixels from the horizontal and vertical weighted convolution.

22. A process according to Claim 21, including the steps of:
applying a neighborhood to each pixel which is common to the original image and the selected pixels which are common to the original image and only one of the selected pixels from the horizontal and vertical weighted convolutions;
applying a first filter matrix to those pixels which are only common to the original image;
applying a second filter matrix to those pixels common to the original image and only one of the selected pixels from the horizontal and vertical weighted convolutions which have a pixel present in its neighborhood which is common to the original image and the selected pixels from both of the horizontal and vertical weighted convolutions;
applying a third filter matrix to those pixels common to the original image and only one of the selected pixels from the horizontal and vertical weighted convolutions which have a pixel present in its neighborhood which is common to the original image and only one of the selected pixels of the horizontal and vertical weighted convolutions and the absence of any pixels present in the neighborhood which are common to the original image and the selected pixels from both of the horizontal and vertical weighted convolutions;
applying a fourth filter matrix to those pixels common to the original image and only one of the selected pixels from the horizontal and vertical weighted convolutions which have only pixels present in its neighborhood which are absent from one or both of the selected pixels of the horizontal and vertical weighted convolutions.

23. A method according to Claim 22, wherein:
the first filter matrix and fourth filter matrix are the same.

24. A method according to Claim 14, including the step of:
applying the horizontal and vertical convolutions a plurality of times.

25. A method according to Claim 14, wherein:
the predetermined number of pixels which the horizontal strings of pixels are shifted for the horizontal convolution differs from the predetermined number of pixels which the vertical strings of pixels are shifted for the vertical convolution.

## Patentansprüche

1. Verfahren zum Verdünnen eines Bildes, mit den Schritten:
Definieren eines Bildes in Form einer Mehrzahl von Bildelementen, d.h. Pixel;
Einhüllen einer jeden, um eine vorherbestimmte Anzahl von Pixel verschobenen horizontalen Folge von Pixel des Bildes mit sich selbst;
Gewichten von jeder verschobenen Position von jeder horizontalen Folge;
Auswählen von bestimmten Pixel der gewichteten, horizontal eingehüllten, Pixelfolgen, die vorherbestimmten Deskriptoren entsprechen, die auf den zentralen Ort hinweisen;
Einhüllen einer jeden, um eine vorherbestimmte Anzahl von Pixel verschobenen vertikalen Folge von Pixel des Bildes mit sich selbst;
Gewichten von jeder verschobenen Position von jeder vertikalen Folge;
Auswählen von bestimmten Pixel der gewichteten, vertikal eingehüllten Pixelfolgen, die vorherbestimmten Deskriptoren entsprechen;
mit "ODER"-Verknüpfen der ausgewählten horizontal und vertikal gewichteten Einhüllungen und der Pixel des Originalbildes;
Beibehalten der Pixel, die gemeinsam im Originalbild und den ausgewählten Pixel der beiden horizontal und vertikal gewichteten Einhüllungen enthalten sind;
Ablegen der Pixel, die abwesend sind vom Orginalbild;
Filtern der Pixel, die dem Orginalbild gemeinsam sind und nur einem der ausgewählten Pixel der horizontal und vertikal gewichteten Einhüllungen;
ferner beibehalten von bestimmten der gefilterten Pixel und Ablegen von anderen in Übereinstimmung mit einer vorherbestimmten Filtermatrix, die auf jedes Pixel in Abhängigkeit der jeweiligen benachbarten Pixelanordnung wirkt; und
Erzeugen eines Ausgangssignals der beibehaltenen Pixel, das einem verdünnten Bild entspricht.

2. Verfahren nach Anspruch 1, das die Schritte beinhaltet:
Auswahl des zentralen Pixels von jeder Pixelfolge, die eine ungerade Zahl von Pixeln aufweist;
Auswahl von wenigstens einem der Pixel zur Linken und zur Rechten des Zentrums von jeder Pixelfolge mit einer geraden Zahl von Pixeln.

3. Verfahren nach Anspruch 1 oder 2, das die Schritte beinhaltet:
Festsetzen von Werten zu den mit "ODER"-verknüpften Pixel in Übereinstimmung mit ihrem Umfang von Gemeinsamkeit mit dem Originalbild und den ausgewählten Pixel der horizontal und vertikal gewichteten Einhüllungen;

Bilden einer Nachbarschaft für jedes Pixel, das nur in dem Originalbild oder gemeinsam im Originalbild und nur einem der ausgewählten Pixel der horizontal und vertikal gewichteten Einhüllungen enthalten ist;

Digitalisieren der Pixel in der Nachbarschaft durch Festsetzen eines Null-Wertes zu den Pixel der Nachbarschaft, die einen bestimmten Wert haben und einem der anderen Pixel der Nachbarschaft, die einen davon verschiedenen Wert haben;

Bilden von zwei binären Zahlen aus den digitalisierten Nachbarschaften;

Bereitstellen einer Filtermatrix mit den binären Zahlen zum Festsetzen, ob ein bestimmtes Pixel als Teil des verdünnten Bildes bewahrt werden soll.

4. Verfahren nach Anspruch 3, das den Schritt beinhaltet:

mehrfaches Anwenden der gleichen Filtermatrix auf bestimmte der bewahrten Pixel, um eine weitere Bildverdünnung zu erhalten.

5. Verfahren nach Anspruch 4, worin die gleiche Filtermatrix dreimal angewendet wird.

6. Ein Verfahren nach Anspruch 3, worin jede Pixelnachbarschaft 3×3 Pixelmatrixen beinhaltet, wobei das zu untersuchende Pixel in dem Zentrum angeordnet ist.

7. Verfahren nach Anspruch 1, das beinhaltet:

Anwenden von verschiedenen Filtermatrixen auf Pixel, die nur in dem Originalbild enthalten sind und bestimmte Pixel, die gemeinsam in dem Originalbild und nur einem der ausgewählten Pixel der horizontal und vertikal gewichteten Einhüllungen enthalten sind.

8. Verfahren nach Anspruch 7, das die Schritte beinhaltet:

Andenden einer Nachbarschaft auf jedes Pixel, das nur das Originalbild ist und auf ausgewählte Pixel, die gemeinsam im Originalbild und nur einem der ausgewählten Pixel der horizontal und vertikal gewichteten Einhüllungen enthalten sind;

Anwenden einer ersten Filtermatrix auf die Pixel, die nur in dem Originalbild enthalten sind;

Anwenden einer zweiten Filtermatrix auf die Pixel, die gemeinsam in dem Originalbild und nur einem der ausgewählten Pixel der horizontal und vertikal gewichteten Einhüllungen sind, die in ihrer Nachbarschaft ein Pixel aufweisen, das gemeinsam in dem Originalbild und den ausgewählten Pixel aus beiden der horizontalen und der vertikal gewichteten Einhüllungen enthalten ist;

Anwenden einer dritten Filtermatrix auf die Pixel, die gemeinsam sind dem Originalbild und nur einem der ausgewählten Pixel der horizontal und vertikal gewichteten Einhüllungen, die ein Pixel in ihrer Nachbarschaft aufweisen, das gemeinsam ist dem Originalbild und nur einem der ausgewählten Pixel der horizontal und vertikal gewichteten Einhüllungen sowie der Abwesenheit von einigen Pixeln, die in der Nachbarschaft anwesend sind und die gemeinsam sind dem Originalbild und den ausgewählten Pixeln aus beiden der horizontal und vertikal gewichteten Einhüllungen;

Anwenden einer vierten Filtermatrix auf die Pixel, die gemeinsam sind dem Originalbild und nur einem der ausgewählten Pixel der horizontal und vertikal gewichteten Einhüllungen, das nur Pixel in seiner Nachbarschaft aufweist, die abwesend von einem oder beiden der ausgewählten Pixel der horizontal und vertikal gewichteten Einhüllungen sind.

9. Verfahren nach Anspruch 8, worin die erste Filtermatrix und die vierte Filtermatrix gleich sind.

10. Verfahren nach Anspruch 1, das den Schritt beinhaltet:

Anwenden der horizontalen und vertikalen Einhüllungen mehrmals.

11. Verfahren nach Anspruch 1, wobei:

die vorherbestimmte Zahl von Pixeln, um die die horizontale Folge von Pixeln verschoben ist, um die horizontale Einhüllung zu bilden von der vorherbestimmten Zahl von Pixeln verschieden ist, um die die vertikale Folge von Pixeln verschoben ist, um die vertikale Einhüllung zu bilden.

12. Verfahren nach Anspruch 1, das die Schritte beinhaltet:

Anwenden einer "ANOREXIC"-Filtermatrix auf das verdünnte Bild, um Doppellinienverbindungen zu eliminieren.

13. Ein Verfahren nach Anspruch 1, worin die Pixel mehrfach gefiltert werden.

14. Verfahren zum Verdünnen eines Bildes, das die Schritte beinhaltet:

Definieren eines Bildes in Form einer Mehrzahl von diskreten Bildelementen, d.h. Pixel;

Ausführen einer horizontalen Einhüllung mit jeder horizontalen Pixelfolge, durch sein horizontales verschieben um eine vorherbestimmte Zahl von Pixel;

Gewichten von jeder verschobenen horizontalen Pixelposition der horizontalen Folge durch Festsetzen einer vorherbestimmten Nummer zu ihr;

Bereitstellen einer horizontalen Deskriptormatrix entsprechend bestimmten der verschobenen horizontalen Pixelpositionen der horizontalen Pixelfolgen, die auf die zentrale Position hinweisen;

Auswahl von bestimmten Pixel der gewichteten, horizontal eingehüllten Pixelfolgen, die den Deskriptoren der horizontalen Deskriptormatrix entsprechen;

Ausführen einer vertikalen Einhüllung mit jeder vertikalen Pixelfolge durch vertikales Verschieben einer bestimmten Anzahl mal;

Gewichten von jeder vertikal verschobenen Pixelposition der vertikalen Folgen durch Festsetzen einer vorherbestimmten Nummer zu ihr;

13

Bereitstellen einer vertikalen Deskriptormatrix, die bestimmten der vertikal verschobenen Pixelpositionen der vertikalen Folge entspricht und auf die zentrale Position hinweist;

Auswahl von bestimmten Pixel der gewichteten, vertikal eingehüllten Pixelfolge, die den Deskriptoren der vertikalen Deskriptormatrix entsprechen;

Ausbilden eines zusammengesetzten Bildes mit den Pixeln des Originalbildes, den ausgewählten Pixeln der gewichteten horizontalen Einhüllung und den ausgewählten Pixeln der gewichteten vertikalen Einhüllung;

Bewahren von den Pixel, die gemeinsam sind dem Originalbild sowie den Pixeln, die aus den gewichteten horizontalen sowie den gewichteten vertikalen Einhüllungen ausgewählt wurden;

Ablegen der Pixel, die nicht in dem Originalbild enthalten sind;

Filtern der Pixel des zusammengesetzten Bildes, die gemeinsam sind dem Originalbild und nur einem der ausgewählten Pixel der horizontalen und vertikal gewichteten Einhüllungen, um bestimmte der gefilterten Pixel zu bewahren und andere in Übereinstimmung mit einer vorherbestimmten Filtermatrix abzulegen, die auf jedes Pixel in Abhängigkeit der jeweils benachbarten Pixelanordnung wirkt; und

Bereitstellen eines Ausgangssignals der bewahrten Pixel, das ein verdünntes Bild darstellt.

15. Verfahren nach Anspruch 14, das die Schritte beinhaltet:

Zuordnen von Werten zu den Pixeln des zusammensetzten Bildes in Übereinstimmung mit dem Umfang ihrer Gleichartigkeit mit dem Originalbild und den ausgewählten Pixeln der horizontal und vertikal gewichteten Einhüllungen;

Bilden einer Nachbarschaft für jedes Pixel des zusammengesetzten Bildes, das dem Originalbild oder dem Originalbild und nur einem der ausgewählten Pixel der horizontal und vertikal gewichteten Einhüllungen entspricht;

Digitalisieren der Pixel der Nachbarschaft durch Zuordnen eines Nullwertes zu den Pixeln der Nachbarschaft, die einen bestimmten Wert haben und zu einem anderen Pixel der Nachbarschaft, die einen verschiedenen Wert haben;

Bereitstellen einer Filtermatrix von den Nachbarn zum Festsetzen, ob ein bestimmtes Pixel als Teil des verdünnten Bildes bewahrt wird.

16. Verfahren nach Anspruch 14, das die Schritte beinhaltet:

Auswahl des zentralen Pixels aus jeder Pixelfolge, die eine ungerade Anzahl von Pixel hat;

Auswahl von wenigstens einem der Pixel zur Linken oder zur Rechten des Zentrums der Pixelfolge, die eine gerade Nummer von Pixeln aufweist.

17. Verfahren nach Anspruch 15, worin:

jede Pixelnachbarschaft eine 3×3 Pixelmatrix beinhaltet, wobei das zu untersuchende Pixel in dem Zentrum hiervon angeordnet ist.

18. Verfahren nach Anspruch 14, das den Schritt beinhaltet:

Anwenden eines "ANOREXIC"-Matrixfilters auf das sich ergebende verdünnte Bild, um Doppellinienverbindungen zu eliminieren.

19. Verfahren nach Anspruch 14, das den Schritt beinhaltet:

vielfaches Wiederholen des Filterschrittes nach den horizontalen und vertikalen Einhüllungen, um festzulegen, welche Pixel als Teil des verdünnten Bildes bewahrt werden und welche Pixel zu eliminieren sind.

20. Verfahren nach Anspruch 14, das den Schritt beinhaltet:

Durchführen von zusätzlichen horizontal und vertikal Einhüllungen auf das verdünnte Bild nach dem Filtern.

21. Verfahren nach Anspruch 14, das die Schritte beinhaltet:

Anwenden von verschiedenen Filtermatrixen auf Pixel, die dem Originalbild gemeinsam sind und auf bestimmte Pixel, die dem Originalbild und nur einem der ausgewählten Pixel der horizontal und vertikal gewichteten Einhüllungen gemeinsam sind.

22. Verfahren nach Anspruch 21, das den Schritt beinhaltet:

Anwenden einer Nachbarschaft auf jedes Pixel, die dem Originalbild und den ausgewählten Pixel gemeinsam sind, die dem Originalbild und nur einem der ausgewählten Pixel der horizontal und vertikal gewichteten Einhüllungen gemeinsam sind;

Anwenden einer ersten Filtermatrix auf die Pixel, die nur dem Originalbild gemeinsam sind;

Anwenden einer zweiten Filtermatrix auf die Pixel, die dem Originalbild und nur einem der ausgewählten Pixel der horizontal und vertikal gewichteten Einhüllungen gemeinsam sind, die ein Pixel in ihrer Nachbarschaft aufweisen, das dem Originalbild und den ausgewählten Pixel der horizontal sowie vertikal gewichteten Einhüllungen gemeinsam ist;

Anwenden einer dritten Filtermatrix auf die Pixel, die dem Originalbild und nur einem der ausgewählten Pixel der horizontalen und vertikal gewichteten Einhüllungen entsprechen, die in ihrer Nachbarschaft ein Pixel aufweisen, das dem Originalbild und nur einem der ausgewählten Pixel der horizontal und vertikal gewichteten Einhüllungen gemeinsam ist und der Abwesenheit von einigen Pixeln der Nachbarschaft entspricht, die gemeinsam dem Originalbild und den ausgewählten Pixeln, aus der horizontal und vertikal gewichteten Einhüllungen sind;

Anwenden einer vierten Filtermatrix auf die Pixel, die dem Originalbild und nur einem der ausgewählten Pixel der horizontal und vertikal gewichteten Einhüllung gemeinsam sind, die in ihrer Nachbarschaft nur Pixel aufweisen, die nicht in einem oder beiden der ausgewählten Pixel der horizontal und vertikal gewichteten Einhüllungen anwesend sind.

23. Verfahren nach Anspruch 22, worin:

die erste Filtermatrix und die vierte Filtermatrix gleich sind.

24. Ein Verfahren nach Anspruch 14, das den Schritt beinhaltet:

mehrfaches Anwenden der horizontalen und vertikalen Einhüllungen.

25. Verfahren nach Anspruch 14, worin:

die vorherbestimmte Zahl von Pixeln um die die horizontale Folge von Pixeln verschoben ist, um die horizontale Einhüllung zu bilden von der vorherbestimmten Zahl von Pixeln verschieden ist, um die die vertikale Folge von Pixeln verschoben ist, um die vertikale Einhüllung zu bilden.

## Revendications

1. Un procédé pour amincir (affiner) une image, comprenant les étapes de:

définition d'une image en termes d'une pluralité d'éléments d'image discrets, c.à d. de pixels;

convolution de chaque chaîne horizontale de pixels de l'image avec elle même décalée d'un nombre de pixels prédéterminé;

pondération de chaque position décalée de chaque chaîne horizontale;

choix de certains des pixels des chaînes pondérées de pixels convoluées horizontalement qui correspondent aux descripteurs prédéterminés indicatifs d'une position centrale;

convolution de chaque chaîne verticale de pixels de l'image avec elle même décalée d'un nombre prédéterminé de pixels;

pondération de chaque position décalée de chaque chaîne verticale;

choix de certains des pixels des chaînes pondérées de pixels convoluées verticalement qui correspondent aux descripteurs prédéterminés;

réunion logique des pixels choisis à partir des convolutions pondérées horizontales et verticales et des pixels de l'image originale;

retenue de ces pixels qui sont communs à l'image originale et aux pixels choisis des deux convolutions pondérées horizontale et verticale;

mise à l'écart de ces pixels qui sont absents de l'image originale;

filtrage de ceux des pixels qui sont communs à l'image originale et seulement à l'un des pixels choisis des convolutions pondérées horizontales et verticales;

retenue supplémentaire de certains des pixels filtrés et mise l'écart des autres selon une matrice de filtre prédéterminée qui opère sur chaque pixel en tenant compte du rang du pixel de son voisinage respectif; et

fourniture d'un signal de sortie des pixels retenus qui représentent une image amincie.

2. Un procédé selon la Revendication 1, incluant les étapes de:

choix du pixel central de chaque chaîne de pixels ayant un nombre impair de pixels;

choix d'au moins un des pixels à gauche ou à droite du centre de chaque chaîne de pixels ayant un nombre pair de pixels.

3. Un procédé selon la Revendication 1 ou 2, incluant les étapes de:

assignation des valeurs aux pixels réunis logiquement en rapport avec l'importance de leurs points communs avec l'image originale et les pixels choisis des convolutions pondérées horizontales et verticales;

formation d'un voisinage pour chaque pixel qui est seulement dans l'image originale ou est commun à l'image originale et seulement à un des pixels choisis des convolutions pondérées horizontales et verticales;

numérisation des pixels dans le voisinage par assignation d'une valeur zéro à ceux des pixels du voisinage ayant une certaine valeur et de un aux autres pixels du voisinage ayant une valeur différente;

formation de deux nombres à partir du voisinage numérisé;

fourniture d'une matrice de filtre avec les nombres binaires pour déterminer si un pixel particulier doit être préservé en tant que partie de l'image amincie.

4. Un procédé selon la Revendication 3, incluant l'étape de:

application de la même matrice de filtre à certains des pixels préservés plusieurs fois pour fournir un amincissement supplémentaire d'image.

5. Un procédé selon la Revendication 4, dans lequel:

la même matrice de filtre est appliquée trois fois.

6. Un procédé selon la Revendication 3, dans lequel:

chaque voisinage de pixel inclut une matrice de pixels $3 \times 3$ avec le pixel examiné placé en son centre.

7. Un procédé selon la Revendication 1, incluant les étapes de:

application des différentes matrices de filtre aux pixels qui sont dans l'image originale seulement et à certains pixels qui sont communs à l'image originale et seulement à l'un des pixels choisis à partir de la convolution pondérée horizontale et verticale.

8. Un procédé selon la Revendication 7, incluant les étapes de:

application d'un voisinage à chaque pixel qui est l'image originale seulement et aux pixels choisis qui

# EP 0 138 373 B1

sont communs à l'image originale et seulement à l'un des pixels choisis à partir des convolutions pondérées horizontales et verticales;

application d'une première matrice de filtre à ceux pixels qui sont dans l'image originale seulement;

application d'une seconde matrice de filtre à ceux des pixels communs à l'image originale et seulement à l'un des pixels choisis à partir des convolutions pondérées horizontales et verticales qui ont un pixel présent dans leur voisinage qui est commun à l'image originale et aux pixels choisis à partir des convolutions pondérées à la fois horizontales et verticales;

application d'une troisième matrice de filtre à ceux des pixels communs à l'image originale et seulement à l'on des pixels choisis à partir des convolutions pondérées horizontales et verticales qui ont un pixel présent dans leur voisinage qui est commun à l'image originale et seulement à l'un des pixels choisis des convolutions pondérées horizontales et verticales et l'absence de tout pixel présent dans le voisinage qui est commun à l'image originale et aux pixels choisis à partir des convolutions pondérées à la fois horizontales et verticales;

application d'une quatrième matrice de filtre à ceux des pixels communs à l'image originale et seulement à l'un des pixels choisis à partir des convolutions pondérées horizontale et verticale qui ont seulement des pixels présents dans leur voisinage qui sont absents de l'un ou des deux pixels choisis des convolutions pondérées horizontales et verticales.

9. Un procédé selon la Revendication 8, dans lequel:

La première matrice de filtre et la quatrième matrice de filtre sont les mêmes.

10. Un procédé selon la Revendication 1, incluant les étapes de:

application des convolutions horizontales et verticales une pluralité de fois.

11. Un procédé selon la Revendication 1, dans lequel:

le nombre prédéterminé des pixels desquels les chaînes horizontales de pixels sont décalées pour la convolution horizontale diffère du nombre prédéterminé des pixels desquels les chaînes verticales de pixels sont décalées pour la convolution verticale.

12. Un procédé selon la Revendication 1, incluant les étapes de:

application d'une matrice de filtre anorexique à l'image amincie pour éliminer les connexions de double ligne.

13. Un procédé selon la Revendication 1, dans lequel:

les pixels sont filtrés une pluralité de fois.

14. Un procédé pour amincissement d'une image comprenant les étapes de:

définition d'une image en termes d'une pluralité d'éléments d'image discrets, c.à.d. pixels;

exécution d'une convolution horizontale avec chaque chaîne de pixel horizontale en la décalant horizontalement d'un nombre prédéterminé de pixels;

pondération de chaque position de pixel décalée horizontale des chaînes horizontales en lui assignant un nombre prédéterminé;

fourniture d'une matrice de descripteur horizontale correspondant à certaines des positions de pixel décalées horizontales des chaînes horizontales indicatrices d'une position centrale;

choix de certains des pixels des chaînes de pixels pondérées convoluées horizontalement qui correspondent aux descripteurs de la matrice de descripteur horizontale;

exécution d'une convolution verticale avec chaque chaine de pixels verticale en la décalent verticalement un nombre de fois prédéterminé;

pondération de chaque situation de pixel décalée verticale des chaînes verticales en lui assignant un nombre prédéterminé;

fourniture d'une matrice de descripteur verticale correspondant à certaines des positions de pixels décalées verticales des chaînes verticales, indicatrices d'une position centrale;

choix de certains des pixels des chaînes de pixels pondérées convoluées verticalement qui correspondent aux descripteurs de la matrice de descripteur verticale;

formation en effet d'une image composite avec les pixels de l'image originale, les pixels choisis à partir de la convolution pondérée horizontale, et des pixels choisis à partir de la convolution pondérée verticale;

préservation de ceux des pixels qui sont communs à l'image originale et aux pixels choisis à partir à la fois des convolutions pondérées horizontales et des convolutions pondérées verticales;

mise à l'écart de ceux des pixels qui sont absents de l'image originale;

filtrage de ceux des pixels de l'image composite qui sont communs à l'image originale et seulement à un des pixels choisis à partir des convolutions pondérées horizontales et verticales pour préserver certains des pixels filtrés et écarter les autres selon une matrice de filtre prédéterminé qui opère sur chaque pixel par rapport à son rang de pixel de voisinage respectif; et

fourniture d'un signal de sortie des pixels préservés qui représentent une image amincie.

15. Un procédé selon la Revendication 14, incluant les étapes de:

assignation de valeurs aux pixels de l'image composite selon l'importance de leur points communs avec l'image originale et aux pixels choisis des convolutions pondérées horizontales et verticales;

formation d'un voisinage pour chaque pixel de l'image composite qui est commun à l'image originale ou à l'image originale et seulement à un des pixels choisis des convolutions pondérées horizontales et verticales;

numérisation des pixels du voisinage en assignant une valeur zéro à ceux des pixels du voisinage

16

ayant une certaine valeur et un aux autres pixels du voisinage ayant une valeur différente;

fourniture d'une matrice de filtre à partir des voisinages pour déterminer si un pixel particulier doit être préservé en tant que partie de l'image amincie.

16. Un procédé selon la Revendication 14, incluant les étapes de:

choix d'un pixel central de chaque chaîne de pixel ayant un nombre impair de pixels;

choix d'au moins un des pixels à gauche ou à droite du centre de chaque chaîne de pixel ayant un nombre pair de pixels.

17. Un procédé selon la Revendication 15, dans lequel:

chaque voisinage de pixel inclut une matrice de pixel 3×3 avec le pixel examiné placé au centre.

18. Un procédé selon la Revendication 14, incluant les étapes de:

application d'un filtre de matrice anorexique à l'image amincie résultante pour éliminer les connexions de double ligne.

19. Un procédé selon la Revendication 14, incluant l'étape:

répétition de l'étape de filtrage une pluralité de fois après les convolutions horizontales et verticales pour déterminer quels pixels doivent être préservés comme parties de l'image amincie et quels pixels doivent être éliminés.

20. Un procédé selon la Revendication 14, incluant l'étape de:

éxécution de convolutions supplémentaires horizontales et verticales sur l'image amincie après filtrage.

21. Un procédé selon la Revendication 14, incluant les étapes de:

application de différentes matrices de filtre aux pixels qui sont communs à l'image originale et à certains pixels qui sont communs à l'image originale et seulement à un des pixels choisis à partir de la convolutions pondérée horizontale et verticale.

22. Un procédé selon la Revendication 21, incluant les étapes de:

application d'un voisinage à chaque pixel qui est commun à l'image originale et aux pixels choisis qui sont communs à l'image originale et seulement à un des pixels choisis à partir des convolutions pondérées horizontales et verticales;

application d'une première matrice de filtre à ceux des pixels qui seulement sont communs à l'image originale;

application d'une deuxième matrice de filtre à ceux des pixels communs à l'image originale et seulement à un des pixels choisis à partir des convolutions pondérées horizontales et verticales qui ont un pixel présent dans leur voisinage qui est commun à l'image originale et aux pixels choisis à partir des convolutions pondérées à la fois horizontale et verticale;

application d'une troisième matrice de filtre à ceux des pixels communs à l'image originale et seulement à un des pixels choisis à partir des convolutions pondérées horizontale et verticale qui ont un pixel présent dans leur voisinage qui est commun à l'image originale et seulement à un des pixels choisis des convolutions pondérées horizontale et verticale et l'absence de n'importe quel pixel présent dans le voisinage qui est commun à l'image originale et aux pixels choisis à partir des convolutions pondérées à la fois horizontale et verticale;

application d'une quatrième matrice de filtre à ceux des pixels communs à l'image originale et seulement à un des pixels choisis à partir des convolutions pondérées horizontale et verticale qui ont seulement des pixels présents dans leur voisinage qui sont absent de l'un ou des deux pixels choisis des convolutions pondérées horizontale et verticale.

23. Un méthode selon la Revendication 22, dans laquelle;

la première matrice de filtre et la quatrième matrice de filtre sont les mêmes.

24. Une méthode selon la Revendication 14, incluant l'étape de:

application des convolutions horizontales et verticales une pluralité de fois.

25. Une méthode selon la Revendication 14, dans laquelle:

le nombre prédéterminé de pixels desquels les chaînes horizontales de pixels sont décalées pour la convolution horizontale diffère du nombre prédéterminé de pixels desquels les chaînes verticales de pixels sont décalées pour la convolution verticale.

FIG. 1

FIG. 7

FIG. 8

FIG. 2A

$R^1$  $2^1$  a f(X+3)

$R^2$  $2^2$  b f(X+2)

$R^3$  $2^3$  c f(X+1)

$R^0$  $2^0$  47  d f(X)

$R^4$  $2^4$  e f(X-1)

$R^5$  $2^5$  f f(X-2)

$R^6$  $2^6$  g f(X-3)

48

| 1 | 2 | 3 | 4 | 5 | 5 | 5 | 4 | 3 | 2 | 1 |

49

45

a

a+b

a+b+c

a+b+c+d

b+c+d+e

a+b+c+d+e

c+d+e+f

d+e+f+g

e+f+g

f+g

g

2  6  14  15  31  61  121  113  112  96  64

FIG. 2B

FIG. 3

FIG. 4

EP 0 138 373 B1

FIG. 6

FIG. 5

FIG. 9

FIG.10

| | 0000 | 0001 | 0010 | 0011 | 0100 | 0101 | 0110 | 0111 | 1000 | 1001 | 1010 | 1011 | 1100 | 1101 | 1110 | 1111 |
|------|---|---|---|---|---|---|---|---|---|---|---|---|---|---|---|---|
| 0000 | 0 | 3 | 0 | 3 | 3 | 3 | 3 | 0 | 0 | 3 | 3 | 3 | 3 | 3 | 2 | 0 |
| 0001 | 3 | 3 | 3 | 3 | 3 | 3 | 3 | 3 | 3 | 3 | 3 | 3 | 0 | 3 | 0 | 2 |
| 0010 | 0 | 3 | 0 | 3 | 3 | 3 | 3 | 3 | 0 | 3 | 3 | 3 | 3 | 3 | 3 | 3 |
| 0011 | 3 | 3 | 3 | 3 | 3 | 3 | 3 | 3 | 2 | 3 | 3 | 3 | 0 | 3 | 0 | 2 |
| 0100 | 3 | 3 | 3 | 3 | 3 | 3 | 3 | 3 | 3 | 3 | 3 | 3 | 3 | 3 | 3 | 3 |
| 0101 | 3 | 3 | 3 | 3 | 3 | 3 | 3 | 3 | 3 | 3 | 3 | 3 | 3 | 3 | 3 | 0 |
| 0110 | 3 | 3 | 3 | 3 | 3 | 3 | 3 | 3 | 3 | 3 | 3 | 3 | 3 | 3 | 3 | 3 |
| 0111 | 0 | 3 | 3 | 3 | 3 | 3 | 3 | 3 | 0 | 3 | 3 | 3 | 2 | 2 | 2 | 2 |
| 1000 | 0 | 3 | 0 | 2 | 3 | 3 | 3 | 0 | 3 | 3 | 3 | 3 | 3 | 3 | 3 | 0 |
| 1001 | 3 | 3 | 3 | 3 | 3 | 3 | 3 | 3 | 3 | 3 | 3 | 3 | 3 | 3 | 3 | 2 |
| 1010 | 3 | 3 | 3 | 3 | 3 | 3 | 3 | 3 | 3 | 3 | 0 | 3 | 3 | 3 | 3 | 3 |
| 1011 | 3 | 3 | 3 | 3 | 3 | 3 | 3 | 3 | 3 | 3 | 3 | 3 | 3 | 3 | 3 | 2 |
| 1100 | 3 | 0 | 3 | 0 | 3 | 3 | 3 | 2 | 3 | 3 | 3 | 3 | 3 | 3 | 3 | 2 |
| 1101 | 3 | 3 | 3 | 3 | 3 | 3 | 3 | 2 | 3 | 3 | 3 | 3 | 3 | 3 | 3 | 2 |
| 1110 | 2 | 0 | 3 | 0 | 3 | 3 | 3 | 2 | 3 | 3 | 3 | 3 | 3 | 3 | 3 | 2 |
| 1111 | 0 | 2 | 3 | 2 | 3 | 0 | 3 | 2 | 0 | 2 | 3 | 2 | 2 | 2 | 2 | 2 |

100

FIG. 11

FIG. 12

FIG. 13

FIG. 14

FIG. 15a

# FIG.15b

SUM "CENTER SUM"
AND "WORKING
BINARY IMAGE"
( O, I, 2, OR 3 )

APPLY DECISION
FILTER

EXIT HERE
IF ONLY PARTIAL
THINNING IS
REQUIRED
( R ≠ 1 )

DO
ANY 2'S
REMAIN
?

N

Y

HAVE
WE PERFORMED
THIS LOOP
N
TIMES
?

N

Y

K = K+1
IS K ≤
DESIRED # OF
CONVOLUTIONS
?

N

Y

PARTIALLY THIN
BINARY IMAGE

```
THE PARTIALLY THIN
IMAGE BECOMES THE
NEW WORKING BINARY
IMAGE
```

200

```
IS
FINAL
ANOREXIC
THINNING DESIRED
?
```
N → FINAL THINNED IMAGE, R = 1 OR 2

Y ↓

```
APPLY
ANOREXIC
FILTER
```
→ FINAL THINNED IMAGE, R = 1

L = MAXIMUM LENGTH OR WIDTH OF ANY SOLID AREA.

$L = 2NK + R, \ R < 2N.$

K IS THE NUMBER OF CONVOLUTIONS PERFORMED SO FAR.

R IS THE MAXIMUM LENGTH OR WIDTH OF ANY SOLID AREA IN THE THIN IMAGE; THINNING IS COMPLETE WHEN R = 1.

# FIG. 15c

11

| | | | | | | | | | | | | | | | | | |
|---|---|---|---|---|---|---|---|---|---|---|---|---|---|---|---|---|---|
| 0 0 0 0 | 0 | 0 | 0 | 0 | 0 | 0 | 0 | 0 | 0 | 0 | 0 | 0 | 0 | 0 | 0 | 0 | 210 |
| 0 0 0 1 | 0 | 0 | 0 | 0 | 0 | 0 | 0 | 0 | 0 | 0 | 0 | 0 | 0 | 0 | 0 | 0 | |
| 0 0 1 0 | 0 | 0 | 0 | 0 | 0 | 0 | 0 | 3 | 0 | 0 | 0 | 0 | 0 | 0 | 0 | 3 | |
| 0 0 1 1 | 0 | 0 | 0 | 0 | 0 | 0 | 0 | 0 | 0 | 0 | 0 | 0 | 0 | 0 | 0 | 0 | |
| 0 1 0 0 | 0 | 0 | 0 | 0 | 0 | 0 | 0 | 0 | 0 | 0 | 0 | 0 | 0 | 0 | 0 | 0 | |
| 0 1 0 1 | 0 | 0 | 0 | 0 | 0 | 0 | 0 | 0 | 0 | 0 | 0 | 0 | 0 | 0 | 0 | 0 | |
| 0 1 1 0 | 0 | 0 | 0 | 0 | 0 | 0 | 0 | 0 | 0 | 0 | 0 | 0 | 0 | 0 | 0 | 0 | |
| 0 1 1 1 | 0 | 0 | 3 | 0 | 0 | 0 | 0 | 0 | 0 | 0 | 3 | 0 | 0 | 0 | 0 | 0 | |
| 1 0 0 0 | 0 | 0 | 0 | 0 | 0 | 0 | 0 | 0 | 0 | 0 | 0 | 0 | 0 | 0 | 0 | 0 | |
| 1 0 0 1 | 0 | 0 | 0 | 0 | 0 | 0 | 0 | 0 | 0 | 0 | 0 | 0 | 3 | 0 | 3 | 0 | |
| 1 0 1 0 | 0 | 0 | 0 | 0 | 0 | 0 | 0 | 3 | 0 | 0 | 0 | 0 | 0 | 0 | 0 | 3 | |
| 1 0 1 1 | 0 | 0 | 0 | 0 | 0 | 0 | 0 | 0 | 0 | 0 | 0 | 0 | 3 | 0 | 3 | 0 | |
| 1 1 0 0 | 0 | 0 | 0 | 0 | 0 | 0 | 0 | 0 | 0 | 3 | 0 | 3 | 0 | 0 | 0 | 0 | |
| 1 1 0 1 | 0 | 0 | 0 | 0 | 0 | 0 | 0 | 0 | 0 | 0 | 0 | 0 | 0 | 0 | 0 | 0 | |
| 1 1 1 0 | 0 | 0 | 0 | 0 | 0 | 0 | 0 | 0 | 0 | 3 | 0 | 3 | 0 | 0 | 0 | 0 | |
| 1 1 1 1 | 0 | 0 | 3 | 0 | 0 | 0 | 0 | 0 | 0 | 0 | 3 | 0 | 0 | 0 | 0 | 3 | |

# FIG. 16

## FIG. 17

| | 0000 | 0001 | 0010 | 0011 | 0100 | 0101 | 0110 | 0111 | 1000 | 1001 | 1010 | 1011 | 1100 | 1101 | 1110 | 1111 |
|---|---|---|---|---|---|---|---|---|---|---|---|---|---|---|---|---|
| 0000 | 0 | 0 | 0 | 0 | 0 | 0 | 0 | 0 | 0 | 3 | 3 | 3 | 0 | 3 | 0 | 0 |
| 0001 | 0 | 3 | 3 | 3 | 0 | 0 | 0 | 0 | 0 | 3 | 3 | 3 | 0 | 0 | 0 | 0 |
| 0010 | 0 | 3 | 3 | 3 | 3 | 3 | 3 | 3 | 3 | 3 | 3 | 3 | 3 | 3 | 3 | 3 |
| 0011 | 0 | 3 | 3 | 3 | 0 | 0 | 0 | 0 | 0 | 3 | 3 | 3 | 0 | 0 | 0 | 0 |
| 0100 | 0 | 0 | 3 | 0 | 3 | 0 | 3 | 0 | 3 | 3 | 3 | 3 | 3 | 0 | 3 | 0 |
| 0101 | 0 | 0 | 3 | 0 | 0 | 0 | 0 | 0 | 0 | 0 | 3 | 0 | 0 | 0 | 3 | 0 |
| 0110 | 0 | 0 | 3 | 0 | 3 | 0 | 3 | 0 | 3 | 3 | 3 | 3 | 3 | 0 | 3 | 0 |
| 0111 | 0 | 0 | 3 | 0 | 0 | 0 | 0 | 0 | 0 | 0 | 0 | 0 | 0 | 0 | 0 | 0 |
| 1000 | 0 | 0 | 3 | 0 | 3 | 0 | 3 | 0 | 3 | 3 | 3 | 3 | 3 | 0 | 3 | 0 |
| 1001 | 3 | 3 | 3 | 3 | 3 | 0 | 3 | 0 | 3 | 3 | 3 | 3 | 3 | 0 | 3 | 0 |
| 1010 | 3 | 3 | 3 | 3 | 3 | 3 | 3 | 0 | 3 | 3 | 3 | 3 | 3 | 3 | 3 | 3 |
| 1011 | 3 | 3 | 3 | 3 | 3 | 0 | 3 | 0 | 3 | 3 | 3 | 3 | 3 | 0 | 0 | 0 |
| 1100 | 0 | 0 | 3 | 0 | 3 | 0 | 3 | 0 | 3 | 3 | 3 | 3 | 3 | 0 | 3 | 0 |
| 1101 | 3 | 0 | 3 | 0 | 0 | 0 | 0 | 0 | 0 | 0 | 3 | 0 | 0 | 0 | 0 | 0 |
| 1110 | 0 | 0 | 3 | 0 | 3 | 3 | 3 | 0 | 3 | 3 | 3 | 0 | 3 | 0 | 3 | 0 |
| 1111 | 0 | 0 | 3 | 0 | 0 | 0 | 0 | 0 | 0 | 0 | 3 | 0 | 0 | 0 | 0 | 0 |

220

## FIG. 18

| | 0000 | 0001 | 0010 | 0011 | 0100 | 0101 | 0110 | 0111 | 1000 | 1001 | 1010 | 1011 | 1100 | 1101 | 1110 | 1111 |
|---|---|---|---|---|---|---|---|---|---|---|---|---|---|---|---|---|
| 0000 | 0 | 0 | 0 | 0 | 0 | 3 | 0 | 0 | 0 | 3 | 0 | 3 | 0 | 3 | 0 | 0 |
| 0001 | 0 | 0 | 3 | 3 | 3 | 3 | 3 | 3 | 0 | 3 | 3 | 0 | 0 | 3 | 3 | 0 |
| 0010 | 0 | 3 | 0 | 3 | 3 | 3 | 3 | 3 | 0 | 3 | 0 | 3 | 3 | 3 | 3 | 3 |
| 0011 | 0 | 3 | 3 | 3 | 3 | 3 | 3 | 3 | 0 | 3 | 3 | 3 | 0 | 3 | 3 | 3 |
| 0100 | 0 | 3 | 3 | 3 | 0 | 3 | 3 | 3 | 3 | 3 | 3 | 3 | 3 | 3 | 3 | 3 |
| 0101 | 3 | 3 | 3 | 3 | 3 | 0 | 3 | 0 | 3 | 3 | 3 | 3 | 3 | 0 | 3 | 0 |
| 0110 | 0 | 3 | 3 | 3 | 3 | 3 | 3 | 3 | 3 | 3 | 3 | 3 | 0 | 3 | 3 | 3 |
| 0111 | 0 | 3 | 3 | 3 | 3 | 0 | 3 | 3 | 3 | 3 | 3 | 3 | 0 | 0 | 3 | 0 |
| 1000 | 0 | 0 | 0 | 0 | 3 | 3 | 3 | 3 | 0 | 3 | 0 | 3 | 3 | 3 | 3 | 3 |
| 1001 | 3 | 3 | 3 | 3 | 3 | 3 | 3 | 3 | 3 | 3 | 3 | 3 | 3 | 3 | 3 | 3 |
| 1010 | 0 | 3 | 0 | 3 | 3 | 3 | 3 | 3 | 0 | 3 | 0 | 3 | 3 | 3 | 3 | 3 |
| 1011 | 3 | 0 | 3 | 3 | 3 | 3 | 3 | 3 | 3 | 3 | 3 | 3 | 3 | 3 | 3 | 3 |
| 1100 | 0 | 0 | 3 | 0 | 3 | 3 | 0 | 0 | 3 | 3 | 3 | 3 | 3 | 3 | 3 | 3 |
| 1101 | 3 | 3 | 3 | 3 | 3 | 0 | 3 | 0 | 3 | 3 | 3 | 3 | 3 | 3 | 3 | 0 |
| 1110 | 0 | 3 | 3 | 3 | 3 | 3 | 3 | 3 | 3 | 3 | 3 | 3 | 3 | 3 | 3 | 3 |
| 1111 | 0 | 0 | 3 | 3 | 3 | 0 | 3 | 0 | 3 | 3 | 3 | 3 | 3 | 0 | 3 | 0 |

230

## FIG. 19

| | 0000 | 0001 | 0010 | 0011 | 0100 | 0101 | 0110 | 0111 | 1000 | 1001 | 1010 | 1011 | 1100 | 1101 | 1110 | 1111 |
|---|---|---|---|---|---|---|---|---|---|---|---|---|---|---|---|---|
| 0000 | 0 | 0 | 0 | 0 | 0 | 0 | 0 | 0 | 0 | 0 | 0 | 0 | 0 | 0 | 0 | 0 |
| 0001 | 0 | 0 | 0 | 0 | 0 | 0 | 0 | 0 | 0 | 0 | 0 | 0 | 0 | 0 | 0 | 0 |
| 0010 | 0 | 0 | 0 | 0 | 0 | 0 | 0 | 0 | 0 | 0 | 0 | 0 | 0 | 0 | 0 | 0 |
| 0011 | 0 | 0 | 0 | 0 | 0 | 0 | 0 | 3 | 0 | 0 | 0 | 0 | 0 | 0 | 0 | 0 |
| 0100 | 0 | 0 | 0 | 0 | 0 | 0 | 0 | 0 | 0 | 0 | 0 | 0 | 0 | 0 | 0 | 0 |
| 0101 | 0 | 0 | 0 | 0 | 0 | 0 | 0 | 0 | 0 | 0 | 0 | 0 | 0 | 0 | 0 | 0 |
| 0110 | 0 | 0 | 0 | 0 | 0 | 0 | 0 | 0 | 3 | 0 | 0 | 0 | 0 | 0 | 0 | 0 |
| 0111 | 0 | 0 | 0 | 3 | 0 | 0 | 3 | 0 | 0 | 0 | 0 | 0 | 0 | 0 | 0 | 0 |
| 1000 | 0 | 0 | 0 | 0 | 0 | 0 | 0 | 0 | 0 | 0 | 0 | 0 | 0 | 0 | 0 | 0 |
| 1001 | 0 | 0 | 0 | 0 | 0 | 0 | 0 | 0 | 0 | 0 | 0 | 0 | 0 | 3 | 0 | 0 |
| 1010 | 0 | 0 | 0 | 0 | 0 | 0 | 0 | 0 | 0 | 0 | 0 | 0 | 0 | 0 | 0 | 0 |
| 1011 | 0 | 0 | 0 | 0 | 0 | 0 | 0 | 0 | 0 | 0 | 0 | 0 | 0 | 0 | 0 | 0 |
| 1100 | 0 | 0 | 0 | 0 | 0 | 0 | 0 | 0 | 0 | 0 | 0 | 0 | 0 | 3 | 0 | 0 |
| 1101 | 0 | 0 | 0 | 0 | 0 | 0 | 0 | 0 | 0 | 3 | 0 | 0 | 3 | 0 | 0 | 0 |
| 1110 | 0 | 0 | 0 | 0 | 0 | 0 | 0 | 0 | 0 | 0 | 0 | 0 | 0 | 0 | 0 | 0 |
| 1111 | 0 | 0 | 0 | 0 | 0 | 0 | 0 | 0 | 0 | 0 | 0 | 0 | 0 | 0 | 0 | 0 |

240

## FIG. 20

| | 0000 | 0001 | 0010 | 0011 | 0100 | 0101 | 0110 | 0111 | 1000 | 1001 | 1010 | 1011 | 1100 | 1101 | 1110 | 1111 |
|---|---|---|---|---|---|---|---|---|---|---|---|---|---|---|---|---|
| 0000 | 0 | 0 | 0 | 0 | 0 | 0 | 0 | 0 | 0 | 0 | 0 | 0 | 0 | 0 | 0 | 0 |
| 0001 | 0 | 0 | 0 | 0 | 0 | 0 | 0 | 0 | 0 | 0 | 0 | 0 | 0 | 0 | 0 | 0 |
| 0010 | 0 | 0 | 0 | 0 | 0 | 0 | 0 | 3 | 0 | 0 | 0 | 0 | 0 | 0 | 0 | 3 |
| 0011 | 0 | 0 | 0 | 0 | 0 | 0 | 0 | 3 | 0 | 0 | 0 | 0 | 0 | 0 | 0 | 0 |
| 0100 | 0 | 0 | 0 | 0 | 0 | 0 | 0 | 0 | 0 | 0 | 0 | 0 | 0 | 0 | 0 | 0 |
| 0101 | 0 | 0 | 0 | 0 | 0 | 0 | 0 | 0 | 0 | 0 | 0 | 0 | 0 | 0 | 0 | 0 |
| 0110 | 0 | 0 | 0 | 0 | 0 | 0 | 0 | 3 | 0 | 0 | 0 | 0 | 0 | 0 | 0 | 0 |
| 0111 | 0 | 0 | 3 | 3 | 0 | 0 | 3 | 0 | 0 | 0 | 3 | 0 | 0 | 0 | 0 | 0 |
| 1000 | 0 | 0 | 0 | 0 | 0 | 0 | 0 | 0 | 0 | 0 | 0 | 0 | 0 | 0 | 0 | 0 |
| 1001 | 0 | 0 | 0 | 0 | 0 | 0 | 0 | 0 | 0 | 0 | 0 | 0 | 3 | 3 | 3 | 0 |
| 1010 | 0 | 0 | 0 | 0 | 0 | 0 | 0 | 3 | 0 | 0 | 0 | 0 | 0 | 0 | 0 | 3 |
| 1011 | 0 | 0 | 0 | 0 | 0 | 0 | 0 | 0 | 0 | 0 | 0 | 0 | 3 | 0 | 3 | 0 |
| 1100 | 0 | 0 | 0 | 0 | 0 | 0 | 0 | 0 | 0 | 3 | 0 | 3 | 0 | 3 | 0 | 0 |
| 1101 | 0 | 0 | 0 | 0 | 0 | 0 | 0 | 0 | 0 | 3 | 0 | 0 | 3 | 0 | 0 | 0 |
| 1110 | 0 | 0 | 0 | 0 | 0 | 0 | 0 | 0 | 0 | 3 | 0 | 3 | 0 | 0 | 0 | 0 |
| 1111 | 0 | 0 | 3 | 0 | 0 | 0 | 0 | 0 | 0 | 0 | 3 | 0 | 0 | 0 | 0 | 3 |

250

# FIG. 21

FROM CONVOLUTION PIXEL VALUE

3   2   1   0

NEIGHBORHOOD

0 ——————→ 0

1
2  } ——→ 1
3

MATRIX
FOR I'S
FIG. 16

210

260

NEIGHBORHOOD

0
1  } ——→ 0
2

3 ——————→ I

3'S
IN 3X3
NEIGHBORHOOD
?

Y

MATRIX
FOR 2'S
WITH 3'S
FIG. 17

220

N

NEIGHBORHOOD

0 ——————→ 0

1
2  } ——→ 1

2'S
IN 3X3
NEIGHBORHOOD
?

Y

MATRIX
FOR 2'S
WITH 2'S
FIG. 18

230

N

NEIGHBORHOOD

0 ——————→ 0

1 ——————→ 1

MATRIX
FOR 2'S
WITH
ONLY I',0'S
FIG. 19

240

IMAGE WITH
PARTIAL THINNING

TO NEW
CONVOLUTION

K = K+1
K ≤ #
?

N

TO ANOREXIC
FILTER

Y

# FIG. 22

FROM
CONVOLUTION
PIXEL VALUE

3  2  1  0

270

NEIGHBORHOOD

0 ⟶ 0

1
2 } ⟶ 1
3

MATRIX
FIG. 20    250

NEIGHBORHOOD

3'S
IN 3X3
NEIGHBORHOOD
?

0
1 } ⟶ 0
2
3 ⟶ 1

Y

N

MATRIX
FIG. 17    220

NEIGHBORHOOD

0 ⟶ 0

1
2 } ⟶ 1

2'S
IN 3X3
NEIGHBORHOOD
?

Y

N

MATRIX
FIG. 18    230

NEIGHBORHOOD

0 ⟶ 0

1 ⟶ 1

IMAGE WITH
PARTIAL THINNING

K=K+1
K ≤ #?

TO ANOREXIC FILTER

N

TO NEW CONVOLUTION

Y